(19) Europäisches Patentamt
European Patent Office
Office européen des brevets

(11) **EP 1 619 219 B1**

(12) # EUROPEAN PATENT SPECIFICATION

(45) Date of publication and mention of the grant of the patent:
**09.11.2011 Bulletin 2011/45**

(21) Application number: **04725198.8**

(22) Date of filing: **01.04.2004**

(51) Int Cl.:
***C08L 71/02*** *(2006.01)* ***C08L 33/06*** *(2006.01)*
***C09K 3/10*** *(2006.01)* ***C09J 201/10*** *(2006.01)*
***C09J 171/02*** *(2006.01)*

(86) International application number:
**PCT/JP2004/004806**

(87) International publication number:
**WO 2004/090035 (21.10.2004 Gazette 2004/43)**

(54) **CURABLE COMPOSITION**

HÄRTBARE ZUSAMMENSETZUNG

COMPOSITION DURCISSABLE

(84) Designated Contracting States:
**AT BE BG CH CY CZ DE DK EE ES FI FR GB GR HU IE IT LI LU MC NL PL PT RO SE SI SK TR**

(30) Priority: **10.04.2003 JP 2003106848**

(43) Date of publication of application:
**25.01.2006 Bulletin 2006/04**

(73) Proprietor: **KANEKA CORPORATION**
**Osaka-shi, Osaka 530-8288 (JP)**

(72) Inventors:
- **KASAI, Mitsuhiro,**
**6760074 (JP)**
- **TAMAI, Hitoshi,**
**6760078 (JP)**
- **YANO, Ayako**
**Kakogawa-shi,**
**Hyogo 6750065 (JP)**

(74) Representative: **Hart-Davis, Jason et al**
**Cabinet Beau de Loménie**
**158, rue de l'Université**
**75340 Paris Cedex 07 (FR)**

(56) References cited:
**EP-A2- 0 108 946** **JP-A- 63 061 076**
**JP-A- 2000 281 718** **JP-A- 2002 129 124**
**JP-A- 2003 096 195** **JP-A- 2003 313 442**
**JP-A- 2004 067 918** **US-A- 4 652 610**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 619 219 B1

## Description

TECHNICAL FIELD

The present invention relates to a curable composition comprising a polyoxypropylene polymer having a cross-linkable silicon group in its molecule and a (meth)acrylic acid ester polymer having a cross-linkable silicon group in its molecule. More specifically, the present invention relates to a curable composition comprising polyoxypropylene polymer having a cross-linkable silicon group in its molecule, a (meth)acrylic acid ester polymer having a cross-linkable silicon group in its side chain and a (meth)acrylic acid ester based polymer having a cross-linkable silicon group only at the terminal.

BACKGROUND ART

Since a mixture of a polyoxypropylene polymer having a cross-linkable silicon group in its molecule (hereinafter, referred to as polyoxypropylene polymer) and a (meth)acrylic acid ester polymer having a cross-linkable silicon group in its molecule is excellent in weather resistance and adhesion properties, it is utilized for a sealing material for construction and adhesive agent (for example, see JP-B-63-65086, JP-B-2-42367 and JP-B-2-44845). However, since a curable composition comprising the polyoxypropylene polymer and the (meth)acrylic acid ester polymer having a cross-linkable silicon group in its side chain has a cross-linkable silicon group in the side chain of an acrylic polymer (usually at random), molecular weight between cross-linking points is small, hence, there has been a problem that elongation of the cured article is insufficient for utilizing it as a sealing material.

On the other hand, a mixture of a polyoxypropylene polymer and a (meth)acrylic acid ester polymer having a cross-linkable silicon group only at the terminal has been also suggested (for example, see JP-A-11-116763). However, there has been a problem that in the case of the curable composition comprising the polyoxypropylene polymer and the (meth)acrylic polymer having a cross-linkable group only at the terminal, the curing speed may be lowered after storage (hereinafter, this phenomenon is referred to as curing delay).

These problems in the mixture of the polyoxypropylene polymer and the (meth)acrylic acid ester polymer having a cross-linkable silicon group in its molecule has been significant particularly in the case where a ratio of the (meth) acrylic polymer having a cross-linkable silicon group in the total weight of the polymer having a cross-linkable silicon group is large.

DISCLOSURE OF INVENTION

An object of the present invention is to provide a curable composition which is good at tension property and storage stability and excellent in weather resistance.

Specifically, the present invention relates to a curable composition comprising the followings:

(1) A curable composition containing (A) a polyoxypropylene polymer having a cross-linkable silicon group in its molecule, (B) a (meth) acrylic acid ester polymer having a cross-linkable group in its side chain, and (C) a (meth) acrylic acid ester polymer having a cross-linkable group only at the terminal. (However, (meth) acrylic acid represents acrylic acid and/or methacrylic acid).
(2) The curable composition described in (1), in which the polymer (C) in prepared by living radical polymerization.
(3) The curable composition described in (2), in which the polymer (C) in prepared by atom transfer radical polymerization.
(4) The curable composition described in (1), in which the polymer (B) is obtained by polymerizing a (meth) acrylic acid ester monomer containing a polymerizable monomer having a methyl ester group.
(5) The curable composition described in any one of (1) to (4), in which molecular weight distribution of the polymer (B) is at least 1.8 and molecular weight distribution of the polymer (C) is at most 1.8.
(6) The curable composition described in any one of (1) to (5), in which the weight of (A) in the total weight of (A), (B) and (C) is at most 50 % by weight.

BEST MODE FOR CARRYING OUT THE INVENTION

As a unit constituting a polymer main chain in the component (A) of the present invention, a component represented by formula (1):

$$-R-O- \qquad (1)$$

(wherein. R represents a bivalent alkylene group having 1 to 4 carbon atoms) can be used. From the viewpoint of availability, the polyoxypropylene polymer is preferably used. This polyoxypropylene polymer may be a linear or branched polymer, or a mixture of these may be also used. Moreover, other monomer units and the like may be contained, however, from viewpoints that viscosity of the polyoxypropylene polymer can be made lower and moderate flexibility can be given to the cured article, it is preferable that an oxypropylene unit exists at least 50 % by weight of the polyoxypropylene polymer, and more preferably at least 80 % by weight.

The process for preparing the main chain of the polymer in the component (A) of the present invention is not particularly limited, for example, in the presence of an initiator and a catalyst, it can be obtained by ring-opening polymerization of monoepoxide. Specifically, examples of the process are polymerizing by an alkali catalyst such as KOH, a method of polymerizing by transition metal compound-porphyrin complex catalyst such as a catalyst obtained by reacting an organic aluminum compound and porphyrin, which has been indicated in JP-A-61-215623 gazette, for example, a method of polymerizing by a composite metal cyanide complex catalyst, which was indicated in JP-B-46-27250, JP-B-59-15336, USP No. 3,278,457, USP No. 3,278,458, USP No. 3,278,459, USP No. 3,427,256, USP No. 3,427,334 and USP No. 3,427,335, and a method of polymerizing using phosphazen, which was indicated in JP-A-11-60723. It is preferable that the methods of polymerizing by a composite metal cyanide complex catalyst or phosphazen, from the viewpoint of obtaining a polyoxypropylene polymer, in which the coloring is scarcely done and the molecular weight distribution is narrow, which has a high molecular weight and low viscosity.

Besides these, the main chain of a polymer of the component (A) of the present invention can be also obtained by conducting chain extension and the like to a polyoxypropylene polymer having a hydroxyl group at terminal using alkyl halide having two or more functions or more such as $CH_2Cl_2$, $CH_2Br_2$ or the like in the presence of basic compound, for example, KOH, NaOH, $KOCH_3$, $NaOCH_3$. An example is a method of conducting the chain extension to a polyoxypropylene polymer having a hydroxyl group at terminal by an isocyanate compound having two or three functions and the like.

The cross-linkable silicon group contained in the component (A) of the present invention is not particularly limited, but a representative example is a group represented by general formula (2):

$$-[Si(R'_{2}-_{b})(Y_{b})O]mSi(R^{2}3\text{-}a)^{y}a \qquad (2)$$

(Wherein, either of $R^1$ and $R^2$ is an alkyl group having 1 to 20 carbon atoms, an aryl group having 6 to 20 of carbon atoms, aralkyl group having 7 to 20 carbon atoms or triorganosiloxy group represented by $(R')_3SiO$-, when 2 or more of $R^1$ or $R^2$ exist, these can be the same or different. Herein, R' is a monovalent hydrocarbon group having 1 to 20 carbon atoms, three of R' can be the same or different. Y is a hydroxyl group or a hydrolyzable group, and when 2 or more of Y exist, these can be the same or different. a is 0, 1, 2 or 3, b is 0, 1, or 2, respectively. Moreover, in m pieces of formula (3):

$$-Si(R^{1}_{2-b})(Y_{b})O- \qquad (3)$$

b can be different. m is an integer of 0 to 19. These satisfy inequality of $a+\Sigma b \geq 1$).

The hydrolyzable group represented by Y is not particularly limited, and a hydrolyzable group conventionally known can be preferably used. Specifically, for example, hydrogen atom, halogen atoms, alkoxy group, acyloxy group, ketoxymate group, amino group, amide group, acid amide group, aminooxy group, mercapto group and alkenyloxy group are preferably used, from the viewpoint that its hydrolyzing property is mild and easily treated, alkoxy group such as methoxy group is particularly preferable.

1 to 3 pieces of this hydrolyzable group or hydroxyl group can be bonded to one silicon atom, and it is preferable that the range of $(a+\Sigma b)$ is 1 to 5. When 2 or more of hydrolyzing groups or hydroxyl group exist in the reactive silicon group, these can be the same or different. In the reactive silicon group, one of silicon atom may exist or two or more of it may exist. In the case where the reactive silicon group is connected to silicon atoms by siloxane bond or the like, about 20 of silicon atoms may exist.

As a hydrolyzable silicon group, although it is not particularly limited, from the viewpoint that hydrolyzing activity is high and hydrolyzing property is mild and easily treated, it is preferable that it is at least one species selected from the member consisting of dimethyl monomethoxy silyl, methyl dimethoxy silyl group, trimethoxy silyl group, ethyldiethoxy silyl group, triethoxy silyl group, methyldiisopropenyloxy silyl group and triisopropenyloxy silyl group.

As a method of introducing a hydrolyzable silicon group into the terminal of a polymer of the component (A) of the present invention, although it is not particularly limited, a variety of methods can be used. Particularly, it is preferable to use a method of reacting a polyoxypropylene polymer having an alkenyl group at the terminal and a hydrosilane compound containing a hydrolyzing silicon group in the presence of a transition metal catalyst of 8th group of elements is used.

Except for this method, it can be also obtained by adding an isocyanate compound containing a hydrolyzing silicon group to a polyoxypropylene polymer having a hydroxyl group at the terminal, by reacting a polyoxypropylene

polymer having an isocyanate group at the terminal and an amine compound containing a hydrolyzing silicon group, by reacting a polyoxypropylene polymer having an isocyanate group at terminal and a mercaptan compound containing a hydrolyzing silicon group and the like.

As a method of preparing the polyoxypropylene polymer having an alkenyl group at the terminal, a method conventionally known may be used, an example is a method in which a compound having an alkenyl group is reacted with hydroxyl group and bonded by ether bond, ester bond, urethane bond, carbonate bond or the like. For example, when an alkenyl group is introduced by ether bond, a method in which after -OM (M is Na or K or the like) was prepared by metal oxidation of a terminal hydroxyl group of a polyoxypropylene of polymer, a compound containing an alkenyl group is reacted is listed.

As a compound containing the alkenyl group, particularly from the viewpoint of reactivity, $CH_2$=CH-$CH_2$-Cl, $CH_2$=C($CH_3$)-$CH_2$-Cl is preferable.

As a method of introducing unsaturated group, except for the above isocyanate compound having $CH_2$=CH-$CH_2$-group, $CH_2$=C($CH_3$)-$CH_2$-group and the like, carboxylic acid, epoxy compound can be also used.

As a transition metal catalyst of 8th group of elements, a metal complex catalyst selected from transistion metal elements of 8th group of elements such as platinum, rhodium, cobalt, paradium and nickel and the like is used. For example, a compound such as $H_2PtCl_6 \cdot 6H_2O$, platinum-vinylsiloxane complex, platinum-olefin complex, Pt metal, RhCl (PPhs)s, Rich, $Rh/Al_2O_3$, $RuCl_3$, $IrCl_3$, $FeCl_3$, $PdCl_2 \cdot 2H_2O$, $NiCl_2$ or the like can be used. From the viewpoint of reactivity of hydroxylation , it is particularly preferable that any one of $H_2PtCl_6 \cdot 6H_2O$, platinum-vinylsiloxane complex, and platinum-olefin complex is used.

Examples of these methods of preparing such as JP-B-1396791, JP-B-1727750, JP-B-2135751 and JP-A-3-72527.

Although the molecular weight of the component (A) of the present invention is not particularly limited, it is preferable that the number average molecular weight, which is calculated as polystyrene according to gel permeation chromatography (hereinafter, referred to as GPC measurement), is in the range from 500 to 100,000. Furthermore, from the viewpoints of handleability and the like, it is preferable that it is in the range from 1,000 to 70,000 is preferable. When number average molecular weight is less than 500, a cured product becomes fragile, and when it is more than 100,000, viscosity of the polymer becomes too high, therefore, it is not preferable.

The component (B) of the present invention is a (meth) acrylic acid ester polymer having a cross-linkable silicon group in a molecule obtained by polymerizing a (meth) acrylic acid ester monomer. One portion of the monomer may be represented by formula (4).

$$CH_2=C(R^3)COOR^4 \qquad (4)$$

(wherein, $R^3$ is a hydrogen atom or a methyl group, $R^4$ is an alkyl group having 1 to 30 carbon atoms)
In the present invention, it is preferable that a polymerizable monomer having a methyl ester group is used. The mechanism is not clarified, however, the existence of methyl ester group in the component (B) contributes to stability of curing speed at the time when the curable composition of the present invention is stored, therefore, it is preferable. Examples of a polymerizable monomer having a methyl ester group are methyl acrylate and methyl methacrylate, however, it is not limited thereto.

Examples of $R^4$ in formula (4) are methyl group, ethyl group, propyl group, n-butyl group, tert-butyl group, 2-ethyl hexyl group, nonyl group, lauryl group, tridecyl group cetyl group, stearyl group and biphenyl group. Also, the monomer represented by formula (4) can be used alone or two or more kinds can be used. Moreover, from the viewpoint of compatibility with the component (A) of the present invention, it is preferable that the monomer represented by an alkyl group having 10 or more carbon atoms of $R^4$ in formula (4) is used, however, it may be not necessarily used or may be selected from the monomers represented by an alkyl group having 1 to 9 carbon atoms of $R^4$ in formula (4) and used.

As a (meth)acrylic acid ester monomer in a polymer of the component (B) of the present invention, a monomer conventionally known can be widely used, and examples are a methyl (meth) acrylate, ethyl (meth)acrylate, n-propyl (meth)acrylate, n-butyl (meth)acrylate, isobutyl (meth)acrylate, tert-butyl (meth)acrylate, n-hexyl (meth)acrylate, heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, myristil (meth)acrylate, cetyl (meth)acrylate, stearyl (meth)acrylate, behenyl (meth)acrylate, biphenyl (meth)acrylate.

A molecular chain of the component (B) of the present invention comprises substantially one kind, or two or more kinds of a (meth)acrylic acid ester monomer unit, what it substantially comprises the above monomer unit means that a ratio of a (meth)acrylic acid ester monomer unit existed in the component (B) is more than 50 % by weight, and preferably, means that it is at least 70 % by weight, in the component (B), besides the (meth)acrylic acid ester monomer unit, a monomer unit having the copolymerizable property with these may be contained. For example, a monomer containing a carboxylic acid group such as (meth)acrylic acid, amide group such as (meth)acryl amide and N-methylol

(meth)acryl amide, epoxy group such as glycidyl (meth)acrylate, amino group such as diethylaminoethyl (meth)acrylate and aminoethylvinyl ether can be expected to have copolymerization effects from the viewpoints of moisture content curability and interior curability. Besides these, an example is a monomer unit derived from acrylonitrile, styrene, α-methyl styrene, alkyl vinyl ether, vinyl chloride, vinyl acetate, vinyl propionate, ethylene.

The component (B) of the present invention can be obtained by a method of usual vinyl polymerization, for example, by a solution polymerization by radical reaction. The polymerization is usually conducted by reacting at 50 to 150°C by adding the above-described monomer, a radical initiator, a chain transfer agent and the like. In this case, in general, as for the molecular weight distribution, wider than 1.8 is obtained.

Examples of the above radical initiator are an azo initiator such as 2,2'-azobisisobutyronitrile, 2,2'-azobis(2-methylbutyronitrile), 4,4'-azobis(4-cyanovaleric) acid, 1,1'-azobis(1-cyclohexanecarbonitrile), azobisisolactate amidine chloride, 2,2'-azobis(2,4-dimethyl valeronitrile), an organic peroxide initiator such as benzoyl peroxide and di-tert-butyl peroxide, however, it is preferable that an azo initiator is used from the viewpoint that it is not affected the solvent which is used in polymerization and a risk such as explosion is low.

Examples of a chain transfer agent are mercaptans such as n-dodecyl mercaptan, tert-dodecyl mercaptan, lauryl mercaptan, γ-mercaptopropyl trimethoxy silane, γ-mercaptopropylmethyl dimethoxy silane, γ-mercaptopropyl triethoxy silane, γ-mercaptopropylmethyl diethoxy silane and a halogenated compound.

The polymerization may be conducted in a solvent. As an example of the solvent, a non-reactive solvent such as ethers, hydrocarbons and esters are preferable.

An example of a method of introducing a cross-linkable silicon group in the polymer of the component (B) of the present invention is a method by polymerizing a compound having both of polymerizable unsaturated bond and a cross-linkable silicon group with a (meth)acrylic acid ester monomer. Examples of a compound having both of polymerizable unsaturated bond and a cross-linkable silicone group are monomers represented by formula (5):

$$CH_2C(R^3)COOR^5\text{-}[Si(R^1_{2-b})(Y_b)O]_m si(R^2_{3-a})Y_a \qquad (5)$$

(wherein, $R^3$ is the same as above. $R^5$ is a bivalent alkylene group having 1 to 6 carbon atoms. $R^1$, $R^2$, Y, a, b and m are the same as above respectively).
or, by formula (6):

$$CH_2{=}C(R^3)[Si(R^1_{2-b})(Y_b)O]_m si(R^2_{3-a})Y_a \qquad (6)$$

(wherein, $R^3$ $R^1$, $R^2$, Y, a, b and m are the same as above, respectively), examples are γ-methacryloxypropyl polyalkoxy silane such as γ-methacryloxypropyl trimethoxy silane, γ-methacryloxypropylmethyl dimethoxy silane and γ-methacryloxypropyl triethoxy silane, γ-acryloxypropyl polyalkoxy silane such as γ-acryloxypropyl trimethoxy silane, γ-acryloxypropylmethyl dimethoxy silane and γ-acryloxypropyl triethoxy silane, vinylalkyl polyalkoxy silane such as vinyl trimethoxy silane, vinylmethyl dimethoxy silane and vinyl triethoxy silane.

As the component (B) of the present invention, it is preferable to use a compound having the number average molecular weight of 500 to 100,000 by calculating as polystyrene according to GPC measurement from the viewpoint of handleability. Furthermore, a component having number average molecular weight of 1,500 to 30,000 is more preferable from the viewpoint that weather resistance and workability of the curable product are excellent.

A (meth)acrylic acid ester polymer having a cross-linkable silicon group only at the terminal of the component (C) of the present invention can be prepatred by a living radical polymerization. Also, it can be prepared by a method of an atom transfer radial polymerization. The main chain of a polymer of the component (C) of the present invention can be prepared by polymerizing mainly the (meth)acrylic acid ester monomer. Herein, "mainly" means that the above monomer occupies at least 50 % by weight, preferably at least 70 % by weight of a total amount of the monomers constituting the polymer. These monomers are not particularly limited and conventionally known ones can be used. Examples are (meth)acrylic acid monomer such as (meth) acrylic acid, methyl (meth) acrylate, ethyl (meth) acrylate, n-propyl (meth) acrylate, isopropyl (meth) acrylate, n-butyl (meth) acrylate, isobutyl (meth) aacrylate, tert-butyl (meth) acrylate, n-pentyl (meth) acrylate, n-hexyl (meth) acrylate, cyclohexyl (meth) acrylate, n-heptyl (meth) acrylate, n-octyl (meth) acrylate, 2-ethylhexyl (meth) acrylate, nonyl (meth) acrylate, decyl (meth) acrylate, dodecyl (meth) acrylate, phenyl (meth) acrylate, toluyl (meth) acrylate, benzyl (meth)acrylate, 2-methoxyethyl (meth) acrylate, 3-methoxybutyl (meth) acrylate, 2-hydroxyethyl (meth) acrylate, 2-hydroxypropyl (meth) acrylate, stearyl (meth) acrylate, glycidyl (meth) acrylate, 2-aminoethyl (meth) acrylate, γ-(methacryloyloxypropyl) trimethoxy silane, ethylene oxide adducts of (meth) acrylic acid, trifluoromethylmethyl (meth) acrylate, 2-trifluoromethylethyl (meth) acrylate, 2-perfluoroethylethyl (meth) acrylate, 2-perfluoroethyl-2-perfluorobutylethyl (meth) acrylate, 2-perfluoroethyl (meth) acrylate, perfluoromethyl (meth) acrylate, diperfluoromethylmethyl (meth) acrylate, 2-perfluoromethyl-2-perfluoroethylmethyl (meth) acrylate, 2-perfluorohexylethyl (meth) acrylate, 2-perfluorodecylethyl (meth) acrylate, 2-perfluorohexadecylethyl(meth) crylate and the like, aromatic vinyl monomer such as styrene, vinyltoluene, α-methylstyrene, chlorostyrene, styrenesulfonic acid and its salt,

a fluorine containing vinyl monomer such as perfluoroethylene and perfluoropropylene, vinylidene fluoride, maleimide monomers such as maleic anhydride, maleic acid, monoalkyl ester and dialkyl ester of maleic acid, fumaric acid, monoalkyl ester and dialkyl ester of fumaric acid, maleimide, methylmaleimide, ethyl maleimide, propyl maleimide, butyl maleimide, hexyl maleimide, octyl maleimide, dodecyl maleimide, stearyl maleimide, phenyl maleimide and cyclohexyl maleimide, acrylonitrile monomers such as acrylonitrile and methacrylonitrile, amide group containing vinyl monomers such as acrylamide and methacryl amide, vinyl esters such as vinyl acetate, vinyl propionate, vinyl pivalate, vinyl benzoate and vinyl cinnamate, alkens such as ethylene and propylene, conjugated dienes such as butadiene and isoprene, vinyl chloride, vinylidene chloride, allyl chloride, allyl alcohol. These can be use d alone or two or more kinds can be used.

The number average molecular weight by calculating as polystyrene according to GPC measurement of the component (C) of the present invention is not particularly limited, but is preferably at least 3,000, more preferably at least 5,000, and especially more preferably at least 10,000. When the molecular weight is small, high elongation of the curable product is not easily appeared. Moreover, from the viewpoint of handleability, it is preferably at most 100,000, and more preferably at most 50,000.

The molecular weight distribution of the component (C) of the present invention is not particularly limited, and it is preferably at most 1.8, more preferably at most 1.6, and further more preferably at most 1.3. A living radical polymerization is preferable since the product having molecular weight distribution of the product of at most 1.6 can be obtained. Although a radical polymerization is difficult to control because polymerization is high, and termination reaction is easily occurred by coupling of radicals, in a living radical polymerization, the molecular weight can be freely controlled by determining the charge ratio of the monomer and initiator the termination reaction is not easily occurred and a polymer whose molecular weight distribution is narrow (Mw/Mn is in the range from about 1.1 to about 1.5) can be obtained. Therefore, the living radical polymerization method is more preferable as a method of preparing a vinyl polymer having the above specified functional group, because a monomer having a specified functional group can be introduced into the approximate optional position of the polymer and the polymer having narrow molecular weight distribution and low viscosity can be obtained. In a narrow definition, "living polymerization" is referred to a polymerization in which the terminal always have the activity all the way and its molecular chain is growing, but in general, pseudo-living polymerization in which as for the terminal, the molecular chain is growing while inactivated ones and activated ones are in an equilibrium state is also included in the livening polymerization. The definition in the present invention is also included in the latter.

Of these, the atom transfer radical polymerization method is more preferable from the viewpoint that molecular weight distribution is at most 1.3 can be obtained. In an atom transfer radical polymerization, an organic halogenated compound, particularly an organic halogenated compound having a particularly high reactive carbon-halogen bond (for example, a carbonyl compound having a halogen at $\alpha$ position and a compound having a halogen at benzyl position), or halogenated sulfonyl compound and the like is used as an initiator. Specific examples are $C_6H_5$-$CH_2X$, $C_6H_5$-C(H)(X)$CH_3$, $C_6H_5$-C(X)$(CH_3)_2$ (wherein, $C_6$Hs is a phenyl group, X is chlorine, bromine, or iodine), $R^6$-C(H)(X)-$CO_2R^7$, $R^6$-C($CH_3$)(X)-C(O)$_2R^7$, $R^6$-C(H)(X)-C(O)$R^7$, R6-C($CH_3$)(X)-C(O)$R^7$ (wherein, $R^6$ and $R^7$ are a hydrogen atom or an alkyl group having 1 to 20 carbon atoms, an aryl group or an aralkyl group, and X is the same as above), $R^6$-$C_6H_4$-$SO_2X$ (wherein, $R^6$ and X are the same with the above-described ones) and the like are listed.

As an initiator for an atom transfer radical polymerization, an organic halide or a halogenated sulfonyl compound having a functional group except for functional group initiating the polymerization can be also used. In these cases, a vinyl polymer having a functional group at the terminal of the main chain on one side, and a growing chain terminal structure of an atom transfer radical polymerization at the terminal of the main chain on the other side is prepared. Examples of these functional groups are alkenyl group, cross-linkable silyl group, hydroxyl group, epoxy group, amino group and amide group.

An organic halide having alkenyl group is not particularly limited, but an example is a compound having a structure shown in the formula (7):

$$R^9R^{10}C(X)\text{-}R^{11}\text{-}R^{12}\text{-}C(R^8)=CH_2 \qquad (7)$$

(wherein, $R^8$ is a hydrogen or methyl group, $R^9$ and $R^{10}$ are hydrogen, or monovalent alkyl group having 1 to 20 carbon atoms, aryl group, or aralkyl group, or ones connected with each other at the other terminal, $R^{11}$ is -C(O)O- (ester group), -C(O)- (keto group), or o-, m-, p-phenylene group, $R^{12}$ may contain direct bond, or one or more ether bonds with a bivalent organic group having 1 to 20 carbon atoms, and X is the same as above).

Specific examples of substituents $R^9$ and $R^{10}$ are hydrogen, methyl group, ethyl group, n-propyl group, isopropyl group, butyl group, pentyl group and hexyl group. $R^9$ and $R^{10}$ may be connected on the other side of the terminal and may form a ring skeleton.

Example of an organic halide having alkenyl group represented by the formula (7), $XCH_2C(O)O(CH_2)_nCH=CH_2$, $H_3$CC (H)(X)C(O)O($CH_2$)nCH=CH2, $(H_3\text{-}C)_2C(X)C(O)O(CH_2)_nCH_2=CH_2$, $CH_3CH_2C(H)(X)C(O)O(CH_2)_nCH=CH_2$,

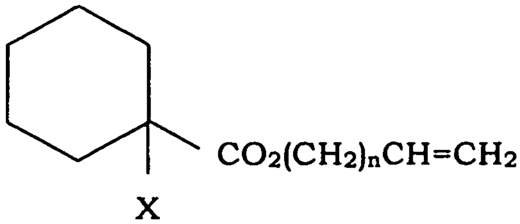

(wherein, X is the same as above, and n is an integer of 0 to 20), $XCH_2C(O)O(CH_2)_kO(CH_2)_nCH=CH_2$, $H_3CC(H)(X)C(O)O(CH_2)_kO(CH_2)_nCH=CH_2$, $(H_3C)_2C(X)C(O)O(CH_2)_kO(CH_2)nCH=CH2$, $CH_3CH_2C(H)(X)C(O)O(CH_2)_kO(CH_2)nCH=CH2$,

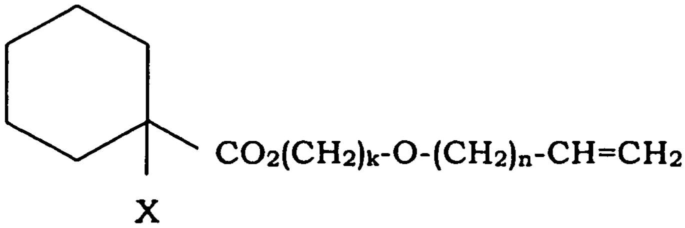

(wherein, X and n are the same as above, and k is an integer of 1 to 20) o-, m-, p-$XCH_2-C_6H_4-(CH_2)_k-CH=CH_2$, o-, m-, p-$CH_3C(H)(X)-C_6H_4-(CH_2)_k-CH=CH_2$, o-, m-, p-$CH_3CH_2C(H)(X)-C_6H_4-(CH_2)_k-CH=CH_2$,
(wherein, X and k are the same as above),
o-, m-, p-$XCH_2-C_6H_4-(CH_2)_k-O-(CH_2)_n-CH=CH_2$, o-, m-, p-$CH_3C(H)(X)-C_6H_4-(CH_2)_k-O-(CH_2)_n-CH=CH_2$, o-, m-, p-$CH_3CH_2C(H)(X)-C_6H_4-(CH_2)_k-O-(CH_2)_nCH=CH_2$ (wherein, X, n and k are the same as above),
o-, m-, p-$XCH_2-C_6H_4-O-(CH_2)_n-CH=CH_2$, o-, m-, p-$CH_3C(H)(X)-C_6H_4-O-(CH_2)_n-CH=CH_2$, o-, m-, p-$CH_3CH_2C(H)(X)-C_6H_4-O-(CH_2)_n-CH=CH_2$ (wherein, X and n are the same as above), o-, m-, p-$XCH_2-C_6H_4-O-(CH_2)_k-O-(CH_2)_n-CH=CH_2$, o-, m-, p-$CH_3C(H)(X)-C_6H_4-O-(CH_2)_k-O-(CH_2)_n-CH=CH_2$, o-, m-, p-$CH_3CH_2C(H)(X)-C_6H_4-O-(CH_2)_k-O-(CH_2)_n-CH=CH_2$ (wherein, X, n and k are the same as above).

Furthermore, examples of an organic halide having alkenyl group are compounds represented by formula (8).

$$H_2C=C(R^8)-R^{12}-C(R^9)(X)-R^{13}-R^{10} \qquad (8)$$

(wherein, $R^8$, $R^9$, $R^{10}$, $R^{12}$, and X are the same as above, and $R^{13}$ is direct bond, -C(O)O- (ester group), -C(O)- (keto group), or o-, m-, p-phenylene group)

R11 is direct bond, or a bivalent organic group having 1 to 20 carbon atoms (may contain one or more of ether bond), however, when it is direct bond, a vinyl group is bonded to carbon to which halogen is bonded, that is, halogenated allylated compound. In this case, since carbon-halogen bond is activated by neighboring vinyl group, it is not necessarily necessary to have C(O)O group, phenylene group or the like as $R^{13}$, it may be direct bond. In the case where $R^{12}$ is not direct bond, it is preferable that $R^{13}$ is C(O)O group, C(O)group, or phenylene group in order to activate carbon-halogen bond.
specific examples of a compound of the formula (8), $CH_2=CHCH_2$ X, $CH_2=C(CH_3)CH_2X$, $CH_2=CHC(H)(X)CH_3$, $CH_2=C(CH_3)C(H)(X)CH_3$, $CH_2=CHC(X)(CH_3)_2$, $CH_2=CHC(H)(X)C_2H_5$, $CH_2=CHC(H)(X)CH(CH_3)_2$, $CH_2=CHC(H)(X)C_6H_5$, $CH_2=CHC(H)(X)CH_2C_6H_5$, $CH_2=CHCH_2C(H)(X)-CO_2R^{14}$, $CH_2=CH(CH_2)_2C(H)(X)-CO_2R^{14}$, $CH_2=CH(CH_2)_3C(H)(X)-CO_2R^{14}$, $CH_2=CH(CH_2)_8C(H)(X)-CO_2R^{14}$, $CH_2=CHCH_2C(H)(X)-C_6H_5$, $CH_2=CH(CH_2)_2C(H)(X)-C_6H_5$, $CH_2=CH(CH_2)_3C(H)(X)-C_6H_5$, (wherein, X is the same as above, and $R^{14}$ is an alkyl group having 1 to 20 carbon atoms, an aryl group and an aralkyl group).

Specific examples of a halogenated sulfonyl compound having an alkenyl group, o-, m-, p-$CH_2=CH-(CH_2)_n-C_6H_4-SO_2X$, o-, m-, p-$CH_2=CH-(CH_2)_n-O-C_6H_4-SO_2X$, (wherein, X and n are the same as above).

An organic halide having a cross-linkable silyl group is not particularly limited, but an example is an compound represented by the formula (9):

$$R^9R^{10}C(X)-R^{11}R^{12}-C(H)(R^8)CH_2-[Si(R^{15}{}_{2-b})(Y_b)O]_m-Si(R^{16}{}_{3-a})Y_8 \qquad (9)$$

(wherein, $R^8$, $R^9$, $R^{10}$, $R^{11}$, $R^{12}$, X, Y, a, b and m are the same as above, and any one of $R^{15}$ and $R^{16}$ are an alkyl group having 1 to 20 carbon atoms, an aryl group and an aralkyl group, or triorganosiloxy group represented by $(R')_3SiO$- (R' is the same as above, when $R^{15}$ or $R^{16}$ exists two or more, these may be the same or different. Also, it satisfies $a+mb \geq 1$).

Specific examples of a compound of formula (9) are $XCH_2C(O)O(CH_2)_nSi(OCH_3)_3$, $CH_3C(H)(X)C(O)O(CH_2)$ $nSi(OCH_3)_3$, $(CH_3)_2C(X)C(O)O(CH_2)_nSi(OCH_3)_3$, $XCH_2C(O)O(CH_2)_nSi(CH_3)(OCH_3)_2$, $CH_3C(H)(X)C(O)O(CH_2)_nSi$ $(CH_3)(OCH_3)_2$, $(CH_3)_2C(X)C(O)O(CH_2)_nSi(CH_3)(OCH_3)_2$, (wherein, X and n are the same as above), $XCH_2C(O)O$ $(CH_2)_kO(CH_2)_nSi(OCH_3)_3$, $H_3CC(H)(X)C(O)O(CH_2)_kO(CH_2)_nSi(OCH_3)_3$, $(H_3C)_2C(X)C(O)O(CH_2)_kO(CH_2)_nSi(OCH_3)_3$, $CH_3CH_2C(H)(X)C(O)O(CH_2)_kO(CH_2)_nSi(OCH_3)_3$, $XCH_2C(O)O(CH_2)_kO(CH_2)_nSi(CH_3)(OCH_3)_2$, $H_3CC(H)(X)C(O)O$ $(CH_2)_kO(CH_2)_n$-$Si(CH_3)(OCH_3)_2$ $(H_3C)_2C(X)C(O)O(CH_2)_kO(CH_2)_n$-$Si(CH_3)(OCH_3)_2$, $CH_3CH_2C(H)(X)C(O)O(CH_2)_kO$ $(CH_2)_n$-$Si(CH_3)(OCH_3)_2$, (wherein, X, k and n are the same as above), o-, m-, p-$XCH_2$-$C_6H_4$-$(CH_2)_2Si(OCH_3)_3$, o-, m-, p-$CH_3$-$C(H)(X)$-$C_6H_4$-$(CH_2)_2Si(OCH_3)_3$, o-, m-, p-$CH_3CH_2C(H)(X)$-$C_6H_4$-$(CH_2)_2Si(OCH_3)_3$, o-, m-, p-$XCH_2$-$C_6H_4$-$(CH_2)_3$ $Si(OCH_3)_3$, o-, m-, p-$CH_3C(H)(X)$-$C_6H_4$-$(CH_2)_3Si(OCH_3)_3$, o-, m-, p-$CH_3CH_2C(H)(X)$-$C_6H_4$-$(CH_2)_3Si(OCH_3)_3$, o-, m-, p-$XCH_2$-$C_6H_4$-$(CH_2)_2$-O-$(CH_2)_3Si(OCH_3)_3$, o-, m-, p-$CH_3C(H)(X)$-$C_6H_4$-$(CH_2)_2$-O-$(CH_2)_3Si(OCH_3)_3$, o-, m-, p-$CH_3CH_2C$ $(H)(X)$-$C_6H_4$-$(CH_2)_2$-O-$(CH_2)_3Si(OCH_3)_3$, o-, m-, p-$XCH_2$-$C_6H_4$-O-$(CH_2)_3Si(OCH_3)_3$, o-, m-, p-$CH_3C(H)$ $(X)$-$C_6H_4$-O-$(CH_2)_3Si(OCH_3)_3$, o-, m-, p-$CH_3CH_2C(H)(X)$-$C_6H_4$-O-$(CH_2)_3Si(OCH_3)_3$, o-, m-, p-$XCH_2$-$C_6H_4$-O-$(CH_2)_2$-O-$(CH_2)_3$-$Si(OCH_3)_3$, o-, m-, p-$CH_3C(H)(X)$-$C_6H_4$-O-$(CH_2)_2$-O-$(CH_2)_3$-$Si(OCH_3)_3$, o-, m-, p-$CH_3C$ $(H)(X)$-$C_6H_4$-O-$(CH_2)_2$-O-$(CH_2)_3$-$Si(OCH_3)_3$, o-, m-, p-$CH_3CH_2C(H)(X)$-$C_6H_4$-O-$(CH_2)_2$-O-$(CH_2)_3$-$Si(OCH_3)_3$, (wherein, X is the same as above).

Furthermore, examples of an organic halide having a cross-linkable silyl group are compounds having a structure represented by formula (10): $(R^{16}_{3-a})(Y_a)Si$-$[OSi(R^{15}_{2-b})(Y_b)]_m$-$CH_2$-$C(H)(R^8)$-$R^{12}$-$C(R^9)(X)$-$R^{13}$-$R^{10}$ (10) (wherein, $R^8$, $R^9$, $R^{10}$, $R^{12}$, $R^{13}$ $R^{14}$ $R^{16}$, a, b, m, X, and Y are the same as above).

Specific examples of the above compounds are $(CH_3O)_3SiCH_2CH_2C(H)(X)C_6H_5$, $(CH_3O)_2(CH_3)SiCH_2CH_2C$ $(H)(X)C_6H_5$, $(CH_3O)_3Si(CH_2)_2C(H)(X)$-$CO_2R^{14}$, $(CH_3O)_2(CH_3)Si(CH_2)_2C(H)(X)$-$CO_2R^{14}$, $(CH_3O)_3Si(CH_2)_3C(H)$ $(X)$-$CO_2R^{14}$, $(CH_3O)_2(CH_3)Si(CH_2)_3C(H)(X)$-$CO_2R^{14}$, $(CH_3O)_3Si(CH_2)_4C(H)(X)$-$CO_2R^{14}$, $(CH_3O)_2(CH_3)Si(CH_2)_4C(H)$ $(X)$-$CO_2R^{14}$, $(CH_3O)_3Si(CH_2)_9C(H)(X)$-$CO_2R^{14}$, $(CH_3O)_2(CH_3)Si(CH_2)_9C(H)(X)$-$CO_2R^{14}$, $(CH_3O)_3Si(CH_2)_3C(H)$ $(X)$-$C_6H_5$,$(CH_3O)_2(CH_3)Si(CH_2)_3C(H)(X)$-$C_6H_5$, $(CH_3O)_3Si(CH_2)_4C(H)(X)$-$C_6H_5$, $(CH_3O)_2(CH_3)Si(CH_2)_4C(H)(X)$-$C_6H_5$, (wherein, X and $R^{14}$ are the same as above).

An organic halide having hydroxyl group or a halogenated sulfonyl compound is not particularly limited, but an example is represented by the following formula:

$$HO\text{-}(CH_2)_k\text{-}OC(O)C(H)(R^{17}) \qquad (X)$$

(wherein a, X and k are the same as above, and $R^{17}$ is a hydrogen atom or an alkyl group having 1 to 20 carbon atoms, an aryl group, an aralkyl group)

An organic halide having an amino group, or a halogenated sulfonyl compound is not particularly limited, but an example is represented by the following formula:

$$H_2N\text{-}(CH_2)_k\text{-}OC(O)C(H)(R^{l7}) \qquad (X)$$

(wherein, X, $R^{17}$ and k are the same as above).

An organic halide having epoxy group, or halogenated sulfonyl compound is not particularly limited, but one such as "Chemical formula 3" shown in Figure is exemplified.

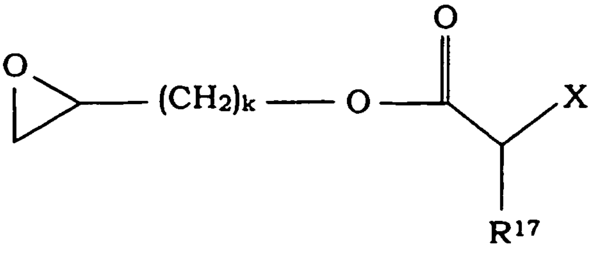

(wherein, X, $R^{17}$ and k are the same as above).

As a vinyl monomer used in this polymerization, it is not particularly limited, all of which have been already exemplified can be preferably used. These may be used alone, or two or more kinds may be used in combination.

As a transition metal complex used for polymerization catalyst, it is not particularly limited, however, it is preferable that a metal complex in which 7th group elements, 8th group elements, 9th group elements, 10th group elements, or 11 th group elements of the periodic table are made center metal is used. More preferable examples are complexes of nil-valent copper, monovalent copper, bivalent ruthenium, bivalent iron, or bivalent nickel. Among these, the complex of copper is preferably used. Examples of the monovalent copper compound are copper (I) chloride, copper (I) bromide, copper (I) iodide, copper (I) cyanide, copper (I) oxide, and copper (I) perchlorate. When the copper compound is used, in order to enhance the catalyst activity, a ligand of polyamine of 2,2'-bipyridyl and its derivative, 1,10-phenanthroline and its derivative, tetramethylethylenediamine, pentamethyldiethylene triamine, hexamethyltris (2-aminoethyl) amine. It is preferable that a nitrogen-containing compound is used as a ligand, it is more preferable that a chelate type a nitrogen-containing compound is used as a ligand and it is still more preferable that N,N,N',N",N"-pentamethyldiethylene triamine is used as a ligand. Moreover, tristriphenylphosphine complex of bivalent ruthenium chloride ($RuCl_2(PPh_3)_3$) is also used as a catalyst. When a ruthenium compound is used as a catalyst, aluminum alkoxides are added as an activation agent. Furthermore, it is preferable that bistriphenyl phosphine complex ($FeCl_2(PPh_3)_2$) of a bivalent ion, bistriphenylphosphine complex ($NiCl_2(PPh_3)_2$) of bivalent nickel and bistributylphosphine complex ($NiBr_2$ $(Pbu_3)_2$) of bivalent nickel are also used as a catalyst.

The polymerization can be carried out in non-solvent or a variety of species of solvents. Examples of solvent are a hydrocarbon solvent such as benzene and toluene, an ether solvent such as diethyl ether, and tetrahydrofuran, halogenated hydrocarbon solvent such as methylene chloride and chloroform, a ketone solvent such as acetone, methyl ethyl ketone and methyl isobutyl ketone, alcohol solvent such as methanol, ethanol, propanol, isopropanol, n-butyl alcohol and tert-butyl alcohol, a nitrile solvent such as acetonitrile, propionitrile, and benzonitrile, an ester solvent such as ethyl acetate and butyl acetate, a carbonate solvent such as ethylene carbonate, and propylene carbonate, and these can be used alone or two or more kinds can be used in combination.

Moreover, it is not particularly limited, however, the polymerization can be carried out in the range from 0°C to 200°C, and it is preferable that it is in the range from 50 to 150°C. An atom transfer radical polymerization of the present invention also includes a reverse atom transfer radical polymerization.

The cross-linkable silicon group which is introduced into the terminal of the component (C) of the present invention is not particularly limited, and typical examples are groups represented by formula (11):

$$-[Si(R^{18}{}_{2-b})(Y_b)O]_mSi(R^{19}{}_{3-a})Y_a \qquad (11)$$

(wherein, Y, a, b and m are the same as above, and any one of $R^{18}$ and $R^{19}$ are an alkyl group having 1 to 20 carbon atoms, an aryl group having 6 to 20 carbon atoms, an aralkyl group having 7 to 20 carbon atoms, or a triorganosiloxy group represented by $(R')_3SiO$- (R' represents the same with the above-described one, in the case where R18 or $R^{19}$ exists two or more, these may be the same or may be different. However, it satisfies a+mb≥1)

Hydrolyzable group represented by the above-described Y is not particularly limited, the conventionally known hydrolyzable group can be used. Concretely, for example, it is preferable that hydrogen atom, halogen atoms, alkoxy group, acyloxy group, ketoxymate group, amino group, amide group, acid amid group, aminooxy group, mercapto group and alkenyloxy group are used, however, from the viewpoint that its hydrolyzing property is mild and easily treated, it is particularly preferable that alkoxy group such as methoxy group or the like is used.

1 to 3 pieces of this hydrolyzable group or hydroxyl group can be bonded to a silicon atom, and it is preferable that the number of (a+mb) is in the range from 1 to 5. In the case where 2 kinds or more of hydrolyzing group or hydroxyl group exist in the reactive silicon group, these may be the same, or different. In the reactive silicon group, one silicon atom may exist, or two kinds or more of it may exist, however, in the case where the reactive silicon group is connected to silicon atom by siloxane bond or the like, about 20 kinds may exist.

As a hydrolyzable silicon group, it is not particularly limited, however, from the viewpoint that hydrolyzing activity is high and from the viewpoint that hydrolyzing property is mild and easily treated, it is preferable that it is at least one group selected from the group consisting of dimethyl monomethoxy silyl group, methyldimethoxysilyl group, trimethoxysilyl group, ethyldiethoxysilyl group, triethoxysilyl group, methyldiisopropenyl oxysilyl group and triisopropenyloxysilyl group.

The component (C) of the present invention has at least one species of cross-linkable silicon group at the terminal of a polymer. From the viewpoint of curability of the component, it is preferable that the number of cross-linkable silicon group is made more than one kind, it is more preferable that it is in the range from 1.1 to 4.0 on the average, and it is still more preferable that it is in the range from 1.5 to 2.5 on the average.

Referring to a method of introducing a cross-linkable silicon group into the terminal of the polymer of the component (C) of the present invention, for example, methods indicated in the followings can be used. It should be noted that in a method of introducing a cross-linkable silicon group, alkenyl group, hydroxyl group using termial functional group conversion, these functional groups can be precursors for each other, it will be described below in the order that traces back from the description of a method of introducing a cross-linkable silicon group.

(1) a method of adding hydrosilane compound having a cross-linkable silicon group to a polymer having at least one alkenyl group at the terminal of the molecular chain in the presence of hydrosilylated catalyst,

(2) a method of reacting a compound having both of cross-linkable silicon group and a group which can react with hydroxyl group such as isocyanate group or the like in a molecule with a polymer having at least one of a hydroxyl group at the terminal of molecular chain,

(3) a method of reacting a compound having both of cross-linkable silicon group and a stable carbanion in a molecule with a polymer having at least one high reactive carbon-halogen bond at the terminal of molecular chain,

and the like are listed.

A polymer having at least one of alkenyl group at the terminal of molecular chain used in a method of (1) is obtained by a variety of methods. Hereinafter, a method of preparing will be exemplified, however, these are not limited.

(1-1) A method of reacting a compound having both of highly polymerizable alkenyl group and lowly polymerizable group in a molecule at the time when vinyl polymer is synthesized by radical polymerization, for example, listed in the candidate list prepared by the following general formula (12):

$$H_2C{=}C(R^{20})\text{-}R^{21}\text{-}R^{22}\text{-}C(R^{23}){=}CH_2 \qquad (12)$$

(wherein, $R^{20}$ represents hydrogen or methyl group, $R^{21}$ represents -C(O)- or o-, m-, p-phenylene group, $R^{22}$ represents direct coupling bond or bivalent organic group having 1 to 20 carbon atoms, and may contain one piece or more of ether bond. $R^{23}$ represents hydrogen or alkyl group having 1 to 20 carbon atoms, aryl group having 6 to 20 carbon atoms or aralkyl group having 7 to 20 carbon atoms)

It should be noted that timing when the compound having both of polymerizable alkenyl group and lowly polymerizable alkenyl group in a molecule is reacted is not limited, it is particularly preferable that in the case where rubber-like nature is expected in a living radical polymerization, in the end period of the polymerization reaction or after the polymerization reaction ending period or the reaction of a predetermined monomer has been terminated, it is reacted as the second monomer.

(1-2) a method of reacting a compound having at least 2 pieces of lowly polymerizable alkenyl group, for example, such as 1,5-hexadiene, 1,7-octadiene, 1,9-decadiene and the like after polymerization reaction ending period or after the reaction of a predetermined monomer is terminated, when vinyl polymer is synthesized by living radical polymerization.

(1-3) a method in which halogen is substituted by reacting a variety of organic metal compound having alkenyl group like organic tin such as allyltributyl tin, allyltrioxtyl tin and the like with a polymer having at least one of highly reactive carbon-halogen bond at the terminal of molecular chain.

(1-4) a method in which halogen is substituted by reacting stabilized carbanion having alkenyl group listed in the candidates represented by formula (13) with a polymer having at least one highly reactive carbon-halogen bond at the terminal of molecular chain.

$$M^+C^-(R^{24})(R^{25})\text{-}\ R^{26}\text{-}C(R^{23}){=}CH_2 \qquad (13)$$

(wherein, $R^{23}$ represents the same as the above-described one, both $R^{24}$, $R^{25}$ represent electronic absorption group for stabilizing carbanion C-, or $R^{24}$ or $R^{25}$ represents the above-described electronic absorption group and the other represents hydrogen or alkyl group having 1 to 10 carbon atoms or phenyl group. $R^{26}$ represents direct bond or bivalent organic group having 1 to 10 carbon atoms, and may contain one piece or more of ether bond. $M^+$ represents alkali metal ion, or quaternary ammonium ion)

As an electronic absorption group of $R^{24}$, $R^{25}$, it is particularly preferable that groups having a structure of $-CO_2R$, -C(O)R and CN.

(1-5) a method in which for example, metal chemical element such as zinc or organic metal compound is made acted to a polymer having at least one of highly reactive carbon-halogen bond at the terminal of molecular chain and enolate anion is prepared, it is reacted with an electrophilic compound having alkenyl group such as an alkenyl group-containing compound containing alkenyl group having leaving group such as halogen and acetyl group, carbonyl compound having alkenyl group, isocyanate compound having alkenyl group, acid halide having alkenyl group and the like.

(1-6) a method in which halogen is substituted by reacting oxyanion or carboxylate anion having alkenyl group for example, indicated in formula (14) or (15) with a polymer having at least one of highly reactive carbon-halogen bond at the terminal of molecular chain.

$$H_2C=C(R^{23})-R^{27}-O-M^+ \quad (14)$$

(wherein, $R^{23}$, $M^+$ represent the same with the above-described one, $R^{27}$ represents bivalent organic group having 1 to 20 carbon atoms, and may contain one piece or more of ether bond),

$$H_2C=C(R^{23})-R^{28}-C(O)O^-M^+ \quad (15)$$

(in the formula, $R^{23}$, $M^+$ represent the same with the above-described one, $R^{28}$ represents direct bond or bivalent organic group having 1 to 20 carbon atoms, and may contain one piece or more of ether bond) and the like are listed.

Examples of a method of synthesizing a polymer having at least one the above-described highly reactive carbon-halogen bond at the terminal of molecular chain is a method of atom transfer radical polymerization by using organic halide and the like as described above as initiator and transition metal complex as catalyst, however, it is not limited.

Moreover, a polymer having at least one of alkenyl group at the terminal of molecular chain is capable of obtaining from a polymer having at least one hydroxyl group at the terminal of molecular chain and methods exemplified in the followings can be utilized, however, these may be not limited.

(1-7) a method in which base such as sodium methoxide is acted to hydroxyl group of the polymer having at least one hydroxyl group at the terminal of molecular chain, and it is reacted with an alkenyl group-containing halide such as allyl chloride,
(1-8) a method in which an alkenyl group-containing isocyanate compound such as allylisocyanate and the like is reacted,
(1-9) a method in which an alkyenyl group-containing acid halide such as acryloyl chloride is reacted in the presence of base such as pyridine or the like,
(1-10) a method in which an alkenyl group-containing carbonic acid such as acrylic acid and the like is reacted with in the presence of acid catalyst,

and the like are listed.

In the present invention, in the case where halogen is not directly involved with a method of introducing alkenyl group such as (1-1), (1-2) and the like, it is preferable that vinyl polymer is synthesized using a living radical polymerization method. From the viewpoint that control is easier to conducted, it is more preferable that a method of (1-2) is used.

In the case where alkenyl group is introduced by converting halogen of a polymer having at least one highly reactive carbon-halogen bond at the terminal of molecular chain, it is preferable that a polymer having at least one of highly reactive carbon-halogen bond at the terminal of molecular chain which is obtained by conducting the radical polymerization (atom transfer radical polymerization) of vinyl monomer by making an organic halide having at least one highly reactive carbon-halogen bond or halogenated sulfonyl compound as an initiator and by making a transition metal complex as a catalyst. From the viewpoint that control is easier to conducted, it is more preferable that a method of (1-6) is used.

Moreover, although as for hydrosilane compound having a cross-linkable silicon group, it is not particularly limited, typical examples are compounds represented by formula (16):

$$H-[Si(R^{18}_{2-b})(Y_b)O]_m-Si(R^{19}_{3-a})Y_a \quad (16)$$

(wherein, $R^{18}$, $R^{19}$, Y, a, b and m represent the same with the above-described ones, and in the case where $R^{18}$ or $R^{19}$ exists two pieces or more, these may be the same or may be different. However, provided that it satisfies $a+mb\geq1$)

Among these hydrosilane compounds, it is particularly preferable from the viewpoint of easiness of availability that a compound having a cross-linkable group represented by formula (17)

$$H-Si(R^{16}_{3-a})Y_a \quad (17)$$

(wherein, $R^{16}$, Y and a represent the same with the above-described ones)
is used.

When the hydrosilane compound having the above-described cross-linkable silicon group is added to an alkenyl group, a transition metal catalyst is usually used. Examples of a transition metal catalyst are catalysts in which platinum solid is dispersed to a carrier such as chemical element of platinum, alumina, silica, carbon black, chloroplatinic, a complex of chloroplatinic with alcohol, aldehyde, ketone and the like, platinum-olefin complex, and platinum (0)-divinyltetramethyldisiloxane complex. Examples of catalyst except for the platinum compound are $RhCl(PPh_3)_3$, $RhCl_3$, $RuCl_3$, $IrCl_3$, $FeCl_3$, $AlCl_3$, $PdCl_2 \cdot H_2O$, $NiCl_2$, $TiCl_4$ and the like are listed.

As a method of preparing a polymer having at least one of hydroxyl group at the terminal of molecular chain used in the method of (2) and (1-7) to (1-10), the following methods are exemplified, however, it is not limited thereto.

(2-1) A method of reacting a compound having both of polymerizable alkenyl group and hydroxyl group in a molecule as a second monomer, for example, represented by the following general formula (18), when vinyl polymer is synthesized by radical polymerization,

$$H_2C=C(R^{20})-R^{21}-R^{22}-OH \qquad (18)$$

(wherein, $R^{20}$, $R^{21}$ and $R^{22}$ are the same as above).

Also, the timing of reacting a compound having both of polymerizable alkenyl group and hydroxyl group in a molecule is not limited, however, it is particularly preferable that in the case where rubber-like nature is expected by a living radical polymerization, in the end period of the polymerization reaction or after the polymerization reaction of a predetermined monomer is terminated, it is reacted as the second monomer.

(2-2) A method of reacting alkenyl alcohol, for example, such as 10-undecenol, 5-hexenol, allyl alcohol in polymerization reaction end period or after the reaction of a predetermined monomer is terminated when vinyl polymer is synthesized by a living radical polymerization.

(2-3) A method of conducting a radical polymerization of vinyl monomer using a large amount of chain transfer agent containing a hydroxyl group such as polysulfide containing hydroxyl group indicated, for example, described in JP-A-5-262808.

(2-4) A method of conducting the radical polymerization of vinyl monomer using hydrogen peroxide or a hydroxyl group -containing initiator described in JP-A-6-239912 and JP-A- 8-283310.

(2-5) A method for conducting the radical polymerization of vinyl monomer using a large amount of alcohols described in JP-A-116132.

(2-6) A method of introducing a hydroxyl group into the terminal by reacting or hydrolyzing halogen of vinyl polymer having at least one a highly reactive carbon-halogen bond with a a hydroxyl group-containing compound by a method described in JP-A-4-132706.

(2-7) A method in which halogen is substituted by reacting stabilized carbanion having a hydroxyl group represented by formula (19) with a polymer having at least one of highly reactive carbon-halogen bond at the terminal of molecular chain.

$$M^+C^-(R^{24})(R^{25})-R^{26}-OH \qquad (19)$$

(wherein, $R^{24}$, $R^{25}$ and $R^{26}$ are the same as above).

As an electronic absorption group of $R^{24}$, $R^{25}$, it is particularly preferable that groups having a structure of $-CO_2R$, -C(O)R and -CN.

(2-8) A method in which for example, metal chemical element such as zinc or organic metal compound is made acted to a polymer having at least one of highly reactive carbon-halogen bond at the terminal of molecular chain and enolate anion is prepared, and then, it is reacted with aldehydes, ketones.

(2-9) a method in which halogen is substituted by reacting oxy anion or carboxylate anion having a hydroxyl represented by formula (20) or (21) with a polymer having at least one highly reactive carbon-halogen bond at the terminal of molecular chain.

$$HO-R^{27}-O^-M^+ \qquad (20)$$

(in the formula, $R^{27}$ and $M^+$ represent the same with the above-described ones)

$$HO-R^{28}-C(O)O^-M^+ \qquad (21)$$

(wherein, $R^{28}$ and $M^+$ are the same as above).

(2-10) A method of reacting with a compound having lowly polymerizable alkenyl group and hydroxyl group in a molecule as the second monomer in the end period of the polymerization reaction or after the reaction of a predetermined monomer has been terminated, when a vinyl polymer is synthesized by a living radical polymerization.

As these compounds, these are not particularly limited, however, an example is a compound represented by formula (22):

$$H_2C=C(R^{20})-R^{27}-OH \qquad (22)$$

(wherein, $R^{20}$, $R^{21}$ and $R^{22}$ are the same as above).

As a compound represented by the above-described general formula (22), it is not particularly limited, however, from the viewpoint that it is easily obtained, an alkenyl alcohol such as 10-undecenol, 5-hexenol and allyl alcohol is preferable.

The above methods are listed.

In the present invention, when halogen is not directly involved with a method of introducing hydroxyl group such as (2-1) to (2-5) and (2-10), it is preferable that vinyl polymer is synthesized using a living radical polymerization method. From the viewpoint that control is easier to perform, it is more preferable that a method of (2-2) is used.

When a hydroxyl group is introduced by converting halogen of a polymer having at least one highly reactive carbon-halogen bond at the terminal of molecular chain, it is preferable that a polymer which is obtained by conducting the radical polymerization (atom transfer radical polymerization) of vinyl 8 monomer by making an organic halide or halogenated sulfonyl compound as an initiator and by using a transition metal complex as a catalyst is used. From the viewpoint that control is easier to perform, it is more preferable that a method of (2-9) is used.

Moreover, examples of a compound having a group which can be reacted with a hydroxyl group such as cross-linkable silyl group, isocyanate group in a molecule are γ-isocyanate propyltrimethoxysilane, γ-isocyanate propylmethyldimethoxysilane, γ-isocyanate propyl triethoxysilane, a generally known catalyst of urethanated reaction can be used, if necessary

An example of a method of synthesizing a polymer having at least one of the above-described highly reactive carbon-halogen bond at the terminal of molecular chain used in method (3) is an atom transfer radical method by using an organic halide as described above and the like as an initiator and transition metal complex as a catalyst, however, the present invention is not limited thereto. Examples of a compound having both of a cross-linkable silyl group and a stabilized carbanion in a molecule are compounds represented by formula (24):

$$M^+C^-(R^{24})(R^{25})-R^{29}-C(H)(R^{30})-CH_2-[Si(R^{15}_{2-b})(Y_b)O]_m-Si(R^{16}_{3-a})Y_a \qquad (25)$$

(wherein, $R^{15}$, $R^{16}$, $R^{24}$, $R^{25}$, Y, a, b and m are the same as above, respectively. $R^{29}$ is direct bond or at least one of bivalent organic group having 1 to 10 carbon atoms, and it may contain a ether bond. $R^{30}$ represents hydrogen, or alkyl group having 1 to 10 carbon atoms, aryl group having 6 to 10 carbon atoms or aralkyl group having 7 to 10 carbon atoms).

As an electronic absorption group of $R^{24}$, $R^{25}$, it is particularly preferable that groups having a structure of $-CO_2R$, -C(O)R and -CN.

As to the mixture ratio of the component (A), the component (B), and the component (C) in the present invention, from the viewpoint of modulus/elongation, the weight ratio of the component (A) and the component (B) is preferably from 90:10 to 50:50. Moreover, it is preferable that the weight ratio of the mixture of the component (A) and the component (B), and the component (C) is in the range from 90:10 to 10:90. Moreover, the weight ratio of the mixture of the component (B) and the component (C) and the component (A) is 95:5 to 20:80, and more preferably 90:10 to 50:50.

In a curable composition of the present invention, in some cases, a curing catalyst and a curing agent are needed. Moreover, in accordance with the physical properties to be targeted, a variety of formulating ingredient may be added.

<Curing catalyst/curing agent>

A polymer having a cross-linkable silicon group cross-links and cures by forming siloxane bond in the presence of conventionally known various condensation catalysts or in the absence of these. As properties of a cured product, in accordance with the molecular weight of a polymer and skeleton of the main chain, a wide variety of products from products in a rubber state to products in a resin state can be prepared.

Examples of these condensation catalyst are tetravalent tin compounds such as dibutyltin dilaurate, dibutyltin diacetate, dibutyltin diethylhexanolate, dibutyltin dioctate, dibutyltin dimethylmalate, dibutyltin diethylmalate, dibutyltin dibutylmalate, dibutyltin diisooctylmalate, dibutyltin ditridecylmalate, dibutyltin dibenzylmalate, dibutyltinmaleate, dioctyltin diacetate, dioctyltin distearate, dioctyltin dilaurate, dioctyltin diethylmalate, dioctyltin diisooctylmalate; bivalent tin compounds such as tin octylate, tin naphthenate, tin stearate, tin ferzatate; monoalkyltin compounds such as monobutyltin compound such as monobutyltin trisoctoate, monobutyltin triisopropoxide and monooctyltin compounds; titanate esters

such as tetrabutyl titanate, tetrapropyl titanate; organic aluminum compounds such as aluminum trisacetylacetonate, aluminum trisethylacetoacetate, diisopropoxyaluminum ethylacetoacetate; carboxylate (2-ethylhexanoic acid, neodecanoic acid, versatic acid , oleic acid, naphthenic acid and the like) metal salt, or reactant and mixture of these and amine compound such as lauryl amine such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, aluminum carboxylate; chelate compounds such as zirconium tetraacetylacetonate, titanium tetraacetylacetonate; aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, cyclohexylamine and the like; aliphatic secondary amines such as dimethylamine, diethylamine, dipropylamine, diisoprpoylamine, dibutylamine, diamylamine, dioctylamine, di(2-ethylhexyl) amine, didecylamine, dilaurylamine, dicetylamine, distearylamine, methylstearylamine, ethylstearylamine, butylstearylamine and the like; aliphatic tertiary amines such as triamylamine, trihexylamine, trioctylamine and the like; aliphatic unsaturated amines such as triallylamine and oleylamine, aromatic amines such as laurylaniline, stearylyaniline, and triphenylamine; and as the other amines, amine compound such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl) phenol, morpholine, N-methylmorpholine, 2-ethyl-4-methylimidazol, 1,8-diazabicyclo (5,4,0) undecene 7 (DBU) or salts of these amine based compound and carboxylic acid; reactant or mixture of amine compound such as reactant or mixture of laurylamine and tin octylate, and organic tin compound; low molecular weight polyamide resin obtained from excessive polyamine and polybasic acid reaction product of excessive polyamine and epoxy compound; γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(β-aminoethyl)-γ-aminopropyl trimethoxysilane, N-(β-aminoethyl) γ-aminopropyltriethoxysilane, N-(β-aminoethyl)-γ-aminopropylmethyldimethoxysilane, N-(β-aminoethyl)-γ-aminopropylmethyldiethoxysilane, N-(β-aminoethyl)-γ-aminopropyltriisopropoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane. Moreover, silanol condensation catalyst such as silane coupling agents such as derivative which modified these, that is, amino modified silyl polymer, silylated amino polymer, unsaturated amino silane complex, phenylamino long chain alkyl silane, aminosilylated silicone;, and further, aliphatic acid such as felzatic acid and the like, the other acidic catalyst such as organic acidic phosphoric ester compound and the like and known silanol condensation catalyst and the like such as basic catalyst and the like can be exemplified. Examples of organic acidic phosphoric ester compound of acidic catalyst are $(CH_3O)_2$-P(=O)(-OH), $(CH_3O)$-P(=O)(-OH)$_2$, $(C_2H_5O)_2$-P(=O)(-OH), $(C_2H_5O)$-P(=O)(-OH)$_2$, $(C_3H_7O)_2$-P(=O)(-OH), $(C_3H_7O)$-P(=O)(-OH)$_2$, $(C_4H_9O)_2$-P(=O)(-OH), $(C_4H_9O)$-P(=O)(-OH)$_2$, $(C_8H_{17}O)_2$-P(=O)(-OH), $(C_8H_{17}O)$-P(=O)(-OH)$_2$, $(C_{10}H_{21}O)_2$-P(=O)(-OH), $(C_{10}H_{21}O)$-P(=O)(-OH)$_2$, $(C_{13}H_{27}O)_2$-P(=O)(-OH), $(C_{13}H_{27}O)$-P(=O)(-OH)$_2$, $(C_{16}H_{33}O)_2$-P(=O)(-OH), $(C_{16}H_{33}O)$-P(=O)(-OH)$_2$, (HO-$C_6H_{12}O)_2$-P(=O)(-OH), (HO-$C_6H_{12}O$)-P(=O)(-OH)$_2$, (HO-$C_8H_{16}O$)-P(=O)(-OH), (HO-CsH$_{16}$O)-P(=O) (-OH)2, [($CH_2OH$)(CHOH)O]$_2$-P(=O)(-OH), [($CH_2OH$)(CHOH)O]-P(=O)(-OH)$_2$, [($CH_2OH$)(CHOH)$C_2H_4O$]$_2$-P(=O)(-OH), [($CH_2OH$)(CHOH)$C_2H_4O$]-P(=O)(-OH)$_2$, but it is not limited to the exemplified substances.

The combination of these organic acids and amine is more preferable from the viewpoint of being capable of reducing the usage amount, since its catalyst activity becomes high. Among combination of organic acid and amine, combination of acidic phosphoric ester and amine, and combination of organic carboxylic acid and amine are preferable, combination based compound of organic acidic phosphoric ester and amine and combination based compound of aliphatic carboxylic acid and amine are more preferable from the viewpoint that the catalyst activity is higher, and curing speed is rapid.

These catalysts may be used alone, or two kinds may be used in combination. An amount of this condensation catalyst is preferably 0.01 to 20 parts (parts by weight, the followings are the same), more preferably 0.5 to 5 parts by weight based on 100 parts of the polymer having a cross-linkable silicon group. When an amount of silanol condensation catalyst is lower than this range, in some cases, curing speed is lowered and curing reaction is not easily and sufficiently progressed. On the other hand, if the amount of silanol condensation catalyst is higher than this range, it is not preferable from the viewpoint that local exothermic heat and foaming is generated at the time of curing, an excellent curable compound is not easily obtained and pot life becomes too short, and from the viewpoint of the workability. It should be noted that it is not particularly limited, however, tin curable catalyst confers the preferable results from the viewpoint that its curability is easily controlled.

Moreover, in the curable composition of the present invention, for the purpose of enhancing the activity of the condensation catalyst, it is possible that a silane coupling agent having the above-described amino group is used as an auxiliary catalyst similarly to the amine compound. This silane coupling agent containing an amino group is a compound having a group containing a silicon atom to which hydrolyzing group is bonded (hereinafter, referred to as hydrolyzing silicon group) and an amino group, and examples of as this hydrolyzing group are the groups already exemplified, however, methoxy group, ethoxy group and the like are preferred from the viewpoint of the hydrolyzing speed. It is

preferable that the number of of hydrolyzing group is two or more, and it is particularly preferable that it is 3 or more.

The amount of these amine compounds is preferably in about 0.01 to about 50 parts by weight based on 100 parts by weight of a polymer having a cross-linkable silicon group, and more preferably 0.1 to 20 parts by weight. If the amount of an amine compound is less than 0.01 part by weight, curing speed is lowered, and curing reaction is not easily and sufficiently progressed. On the other hand, when the amount of the amine compound is more than 30 parts by weight, since pot life is too short, it is not preferable from the viewpoint of workability.

Only one kind of these amine compounds may be used alone, or two or more kinds may be used in mixture.

Furthermore, a silicon compound which does not have an amino group and a silanol group may be added as an auxiliary catalyst. These silicon compounds are not limited, however, examples are preferably phenyltrimethoxysilane, phenylmethyldimethoxysilane, phenyldimethylmethoxysilane, diphenyldimethoxysilane, diphenyl diethoxysilane and triphenylmethoxysilane. Particularly, diphenyldimethoxysilane and diphenyldiethoxysilane are preferable since they cost low and are easily available.

Furthermore, the amount of the silicon compound is preferable about 0.01 to about 20 parts by weight based on 100 parts by weight of a polymer having a cross-linkable silicon group, and more preferably 0.1 to 10 parts by weight. If the amount of the silicon compound becomes lower than this range, an effect of acceleration of curing reaction may decrease. On the other hand, the amount of the amine compound is more than this range, the degree of hardness and tension strength of the cured product is lowered.

A kind and an amount of addition of a curing catalyst and a curing agent are capable of controlling curability, mechanical physical properties and the like of the present invention in accordance with purposes and uses. Also, it is possible that a kind and an amount of addition of a cuing catalyst and a curing agent are changed in accordance with the reactivity of silicon group of a polymer having a cross-linkable silicon group, and in the case where reactivity is high, it is possible to be cured sufficiently even in the range of a small amount of from 0.01 to 1 parts by weight.

<Adhesion imparting agent>

To the composition of the present invention, a silane coupling agent and an adhesion imparting agent except for silane coupling agent can be added. If the adhesion imparting agent is added, the risk of peeling off sealing materials from adhered such as siding board can be reduced by varying a joint width with external forces. Moreover, according to circumstances, the use of primer used for the purpose of enhancing the adhesivenss is not needed, and thus simplification of application process is expected. As a specific example of a silane coupling agent, a silane coupling agent having a functional group such as amino group, mercapto group, epoxy group, carboxyl group, vinyl group, isocyanate group, isocyanurate, halogen and the like can be exemplified, specific examples are silane-containing isocyanate group such as γ-isocyanatepropyltrimethoxysilane, γ-isocyanatepropyltriethoxysilane, γ-isocyanatepropylmethyldiethoxysilane, γ-isocyanate propylmethyldimethoxysilane; amino group-containing silane such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, N-(2-aminoethyl)-3-aminopropyltrimethoxysilane, N-(2-aminoethyl)-3-aminopropylmethyldimethoxysilane, N-(2-aminoethyl)-3-aminopropyltriethoxysilane, N-(2-aminoethyl)-3-aminopropyltriethoxysilane, N-(2-aminoethyl)-3-aminopropylmethyldiethoxysilane, N-(2-aminoethyl)-3-aminopropyltriisopropoxysilane, γ-ureidopropyltrimethoxysilane, N-phenyl-γ-aminopropyltrimethoxysilane; N-benzyl-γ-aminopropyltrimethoxysilane, N-vinylbenzyl-γ-aminopropyltriethoxysilane; mercapto group-containing silanes such as γ-mercaptopropyltrimethoxylsilane, γ-mercaptopropyltriethoxysilane, γ-mercaptopropylmethyldimethoxysilane, γ-mercaptopropylmethyldiethoxysilane; epoxy group-containing silanes such as γ-glycidoxypropyltrimethylsilane, γ-glycidoxypropyltriethoxysilane, γ-glycidoxypropylmethyldimethoxysilane, β-(3,4-epoxycyclohexyl)ethyl trimethoxysilane, β-(3,4-epoxycyclohexyl)ethyltriethoxysilane; caboxysilanes such as β-carboxyethyltriethoxysilane, β-carboxyethylphenylbis (2-methoxyethoxy) silane, N-carboxymethyl-β-aminoethyl-γ-aminopropyltrimethoxysilane; vinyl-type unsaturated group-containing silianes such as vinyltrimethoxysilane, vinyltriethoxysilane, γ-methacryloyloxypropylmethyldimethoxysilane, γ-acryloyloxypropyltriethoxysilane; halogen-containing silanes such as γ-chloropropyltrimethoxysilane; isocyanurate silanes such as tris(trimethoxysilyl) isocyanurate. Moreover, derivatives obtained by modifying these described above such as an amino modified silyl polymer, silylated amino polymer, unsaturated amino silane complex, phenyl amino long chain alkyl silane, amino slylated silicone, block isocyanate silane, silylated polyester and the like, which are can be also employed as a silane coupling agent.

A silane coupling agent used in the present invention is usually used in the range from 0.1 to 20 parts by weight based on 100 parts of polymer having a cross-linkable silicon group. It is particularly preferable to use in the range from 0.5 to 10 parts by weight. Referring to the effect of silane coupling agent added to a curable composition of the present invention, in the case where it is used for an inorganic substrate such as a variety of kinds of adherends, that is, glass, aluminum, stainless steel, zinc, copper mortar and the like, or in the case where it is used for an organic substrate made from vinyl chloride, acryl, polyester, polyethylene, polypropylene, polycarbonate and the like, under the non-primer conditions or under the primer treatment conditions, it shows significant adhesive property improvement effects. In the case where it is used under the non-primer conditions, the effect of improving the adhesive property with respect to a

variety of kinds adherends is particularly significant.

Specific examples except for silane coupling agent, it is not particularly limited, are epoxy resin, phenol resin, sulfur, alkyltitanates, aromatic polyisocyanate.

As for the above-described adhesion imparting agent, only one kind may be used, or two kinds or more may be mixed and used. This adhesion imparting agent can improve adhesion properties for adherends by adding this adhesion imparting agent. It is not particularly limited, however, it is preferable that silane coupling agents selected from the above-described adhesion imparting agents in an amount of 0.1 to 20 parts by weight are used in combination for enhancing the adhesive property for metal adherends, particularly such as an oil pan.

<Plasticizer>

To a curable composition of the present invention, a variety of plasticizers may be used if it is necessary. If a plasticizer is used in combination with a filler be described later, it is advantageous since the elongation the curable compound can be enlarged and a large amount of filler can be mixed, however, it is not necessarily added. As a plasticizer, it is not particularly limited, however, depending upon the purpose such as adjustment of physical property, adjustment of general properties, examples are phthalate esters such as dibutyl phthalate, diheptyl phthalate, di (2-ethylhexyl) phthalate, and butylbenzyl phthalate: non-aromatic dibasic acid esters such as dioctyl adipate, dioctyl sebacate, dibutyl sebacate acid, and isodecyl succinate; aliphatic esters such as butyl oleate, and methyl acetylricinolate; esters of polyalkylene glycol such as diethylene glycol dibenzoate, and triethylene glycol dibenzoate, pentaerythritol ester; phosphate esters such as tricresyl phosphate, and tributyl phosphate; trimellitic acid esters; polystyrenes such as polystyrene, and poly-$\alpha$-methylstyrene; polybutadiene, polybutene, polyisobutylene, butadiene-acrylonitrile, polychloroprene; chlorinated paraffin; hydrocarbon oil such as alkyldiphenyl, and partially hydrogenation tarphenyl, processing oils; polyetherpolyol such as polyethylene glycol, polypropylene glycol and polytetramethylene glycol, and derivative in which hydroxyl groups of these polyetherb polyols are converted into ester group, and ether group; epoxy plasticizers such as epoxylated soybean oil, and benzyl epoxy stearate; polyester plasticizer obtained from dibasic acid such as sebacic acid, adipic acid, azelaic acid, and phthalic acid, and dihydric alcohol such as ethylene glycol, diethylene glycol, triethylene glycol, propylene glycol, and dipropylene glycol; vinyl polymers obtained by polymerizing vinyl monomer such as acryl plasticizer by using a variety of methods.

Among these described above, a high molecular plasticizer which is a polymer having number average molecular weight of 500 to 15,000 by adding this plasticizer, the initial physical properties can be maintained for a long period and drying properties (also referred to as painting property) can be improved when applying alkyd coating to the curing composition compared with when using a low molecular plasticizer which does not contain the polymer component in the molecule has been used as well as the mechanical properties such as viscosity and slumping property of the curable composition and the tensile strength and elongation of the curable compound obtained by curing the composition can be adjusted. Also, there is no limitation, but this high molecular plasticizer may a functional group.

Although it has been described that the number average molecular weight is in the range from 500 to 15,000, it is preferably from 800 to 10,000, and more preferable from 1,000 to 8,000. If the molecular weight is too low, the plasticizer is flown out with time by heat and raininig, the initial physical properties cannot be maintained for a long term and alkyd coating property can be improved. Moreover, if the molecular weight is too high, viscosity becomes high and the workability becomes bad.

Among these high molecular plasticizer, polyether plasticizers and (meth)acryl polymer plasticizer are preferable from the viewpoint of high elongation property and high weather resistance. Examples of a method of synthesizing acryl polymer are a method of conventional solution polymerization and non-solvent type acrylic polymer. Since the latter acrylic plasticizer is preferable for an object of the present invention sinceit is prepared by a method of high-temperature continuous polymerization without using a solvent and a chain transfer agent (USP No. 4,414,370, JP-A-6207, JP-A-58005, JP-A-1-313522, and USP No. 5,010,166. Without particular limitation, an example is UP series of Toa synthestic compounds (see KOUGYOUZAIRYO, Oct. 1999). Needless to say, as the other synthesizing method, an example is a living radical polymerization method. According to this method, it is preferable from the viewpoint that the molecular weight distribution of the polymer is narrow and the lowering its viscosity is possible, and further, an atom transfer radical polymerization method is more preferable, however, the present invention is not limited thereto.

Molecular weight distribution of a high molecular polymer plasticizer, it is not particularly limited, however, from the viewpoint of viscosity is preferable narrow, less than 1.8 is preferable. It is more preferably at most 1.7, still more preferably at most 1.6, and further more preferably at most 1.5, particularly preferably at most 1.4, and most preferably at most 1.3.

A plasticizing agent containing the above-described high molecular polymer plasticizing agent may be used singularly, or two or more kinds may be used in combination, however, it is not necessarily required. If it is necessary, a high molecular plasticizing agent is used, and a low molecular polymer plasticizing agent may be further used in combination in the range which does not give a harmful effect on the physical properties. Moreover, phthalic esters and

acrylic polymer are particularly preferable from the viewpoint of the compatibility with the mixture of the component (A), the component (B) and the component (C).

Also these plasticizing agents can be formulated at the time of preparing the polymer.

In the case of using the plasticizing agent, the amount used is not limited, but it is from 5 to 150 parts by weight based on 100 parts by weight of the polymer having a cross-linkable silicon group, it is preferable that it is in the range from 10 to 120 parts by weight, and it is more preferable that it is in the range from 20 to 100 parts by weight. In the case where it is less than 5 parts by weight, the effect as a plasticizing agent is not easily exerted, and in the case where it is more than 150 parts by weight, the mechanical strength of the curable compound tends to be insufficient.

<Fillers>

A variety of kinds of fillers may be used for a curable composition of the present invention if it is necessary. As a filler, it is not particularly limited, however, examples are reinforcing fillers such as wood flour, pulp, cotton tip, asbestos, glass fiber, carbon fiber, mica, walnut shell flour, rice hull flour, graphite, diatomaceous earth, china clay, silica (such as fumed silica, precipitated silica, crystalline silica, molten silica, dolomite, and silicic acid anhydride, and hydrated silicic acid), and carbon black; fillers such as calcium carbonate heavy, colloidal calcium carbonate, magnesium carbonate, diatomaceous earth, calcined clay, clay, talc, titanium oxide, bentonite, organic bentonite, ferric oxide, red iron oxide, aluminum fine powder, flint powder, zinc oxide, active zinc white, zinc powder, zinc carbonate and shirasu balloon; fibrous filler such as asbestos, glass fiber and glass filament, carbon fiber, Kevlar fiber and polyethylene.

Among these fillers, it is preferable that precipitated silica, fumed silica, crystalline silica, molten silica, dolomite, carbon black, calcium carbonate, titanium oxide, talc and the like are used.

Particularly, when a curable compound having a high strength is preferred to be obtained with these fillers, a filler selected mainly from fumed silica, precipitated silica, silicic acid anhydride, hydrated silicic acid, carbon black, surface treated fine calcium carbonate, crystalline silica, molten silica, calcined clay, clay and active zinc white can be added. Among these, silica in a state of super fine powder having specific surface area (according to BET absorption method) of at least 50 $m^2/g$, usually, it is in the range from 50 to 40 $m^2/g$, and it is preferable that it is in the range from at least 100 to 300 $m^2/g$ or more. Moreover, it is more preferable to use a silica whose surface is previously hydrophobically treated with an organic silicon compound such as organo silane, organo silazane and diorganocyclopoly siloxane.

More specific example of silica fillers with a high reinforceability is not particularly limited, but are AEROSIL available from Nihon Aerosil, Co., Ltd. which is one of fumed silica and Nipsil made by TOSOH SILICA CORPORATION. which is one of precipitated silica.

Moreover, in the case where a curable compound whose elongation is large with low strength is desired to obtain, a filler selected mainly from titanium oxide, calcium carbonate, talc, ferric oxide, zinc oxide and balloon of deposits of volcanic ash and sand and the like can be added. It should be noted that in general, when specific surface of calcium carbonate is small, may have insufficient effect of improvement in strength at break of the curable compound, elongation at break, adhesive property and resistance to weather adhesive property may be not enough. The larger the value of specifc surface area is, the larger the improvement effect of the strength at break, elongation at break and adhesive property and weather resistance adhesive property of the cured product becomes.

Furthermore, calcium carbonate is more preferably treated on the surface by using a surface treating agent. When a surface treated calcium carbonate is used, it is considered that the workability of its composition of the present invention is improved and the improvement effect of adhesion property and weather resistance adhesion property of the curable composition is further enhanced compared with the case of using calcium carbonate without surface treatment. As the above-described surface treating agent, surfactant such as aliphatic acid, aliphatic acid soap, aliphatic ester and the like, and a variety of coupling agent such as silane coupling agent, and titanate coupling agent are used. As a concrete example, the present invention is not limited to the followings, however, aliphatic acid such as caproic acid, caprylic acid, pelargonic acid, capric acid, undecanoic acid, lauric acid, myristic acid, palmitic acid, stearic acid, behenic acid, and oleic acid, sodium salts and potassium salts of these aliphatic acids, and alkyl esters of these aliphatic acids. Examples of a surfactant are sulfuric ester type anion surfactant such as polyoxyethylenealkylether sulfuric ester, long chain alcohol sulfuric ester and the like their sodium salt, potassium salt and the like, sulfonic acid type anionic surfactant such as alkylbenzene sulfonate, alkylnaphthalene sulfonic acid, paraffin sulfonic acid, $\alpha$-olefin sulfonic acid, alkyl sulfosuccinic acid, and their sodium salts and potassium salts. As for the amount of treatment of this surface treating agent, it is preferable that it is treated in the range from 0.1 to 20 % by weight, and it is more preferable that it is treated in the range from 1 to 5 % by weight. In the case where the amount of treatment is less than 0.1% by weight, the improvement effect of the workability, the adhesive property and resistance to weather adhesive property may not be enough, and if it is more than 20 % by weight, the storage stability of the relevant curable composition may be lowered.

It is not particularly limited, however, when calcium carbonate is used, in the case where the improvement effect of thixo-property of formulated compounds, strength at break of curable compound, elongation at break, adhesive property, weather resistance adhesion property and the like of the cured product is particularly expected, it is preferable

that collidal calcium carbonate is used.

On the other hand, ground calcium carbonate may be added for the purpose of making viscosity of formulated compounds lower, increasing the amount, lowering the cost and the like, however, the followings can be used if it is necessary in the case where this ground calcium carbonate is used.

Ground calcium carbonate is a compound in which natural chalk (Paris white), marble, limestone and the like has been mechanically powdered and processed. As for a method of powdering, there are a dry method and a wet method, however, it is not preferable in many cases that a wet type powdered product is used since the storage stability of a curable composition of the present invention is made bad. Ground calcium carbonate becomes a product having a variety of average particle diameters by classification. It is not particularly limited, however, in the case where the improvement effect of strength at break, elongation at break, adhesion property and weather resistance adhesion property of the curable compound is expected, it is preferable that the value of the specific surface area is in the range from at least 1.5 $m^2/g$ to at most 50 $m^2/g$, it is more preferable that it is in the range from at least 2 $m^2/g$ to at most 50 $m^2/g$, it is still more preferable that it is in the range from at least 2.4 $m^2/g$ to at most 50 $m^2/g$, and it is particularly preferable that it is in the range from at least 3 $m^2/g$ to at most 50 $m^2/g$. In the case where specific surface area is less than 1.5 $m^2/g$, the improvement effect may not be enough. Needless to say, to the case where solely viscosity is lowered, the case where the increasing of the amount is sole object and so on are not necessarily applied with these range described above.

It should be noted that the value of specific surface area is referred to as a value measured by conducting the air permeation method (specific surface area from permeability with respect to fine particle filler layer) in accordance with JIS K 5101 as a measurement method. It is preferable that a specific surface area measurement device SS-100 type made by Shimazu is used.

These fillers may be used singularly or in combination of at least two kinds in accordance with the object and necessity. It is not particularly limited, however, for example, when ground calcium carbonate and colloidal calcium carbonate whose value of specific surface area is at least 1.5 $m^2/g$ are combined if it is necessary, the rising of viscosity of formulated compounds can be suppressed gradually and the improvement effect of strength a break, elongation at break, adhesion property and weather resistance adhesion property of the cured product can be largely expected.

As for the amount of addition in the case where a filler is used, it is preferable that the filler is used in the range from 5 to 1,000 parts by weight based on 100 parts by weight of a polymer having a cross-linkable silicon group, it is more preferable that it is used in the range from 20 to 500 parts by weight, and it is particularly preferable that it is used in the range from 40 to 300 parts by weight. In the formulated amount is less than 5 parts by weight, in some cases, the improvement effect of strength at break, elongation at break, adhesion property and weather resistance adhesion property of a cured product may not be, in some cases, enough, and in the case where it is more than 1,000 parts by weight, the workability of the relevant curable composition may be, in some cases, lowered. The filler may be used singularly or two or more kinds may be used in combination.

<Fine microballoon>

Moreover, a fine microballoon particle may be used in combination with these reinforcing fillers for the purpose of contemplating to make it light weighted without occurring a significant lowering of the physical properties and low cost.

These fine microballoons (hereinafter, referred to as balloon) is not particularly limited, as described in "The newest technologies for high performance fillers" (CMC), balloons constituted with an inorganic or organic material having the diameter of at most 1 mm, preferably having the diameter of at most 500 μm, and more preferably having the diameter of at most 200 μm are listed. Especially, it is preferable that a balloon having true specific gravity of at most 1.0 $g/cm^3$ is used, more preferably at most 0.5 $g/cm^3$.

As the above-described inorganic based balloon, silic acid based balloon and non-silic acid based balloon can be exemplified, as a silic acid based balloon, shirasu balloon, pearlite, glass balloon, silca balloon, fly ash balloon and the like can be exemplified, and as a non-silic acid based balloon, alumina balloon, zirconia balloon, carbon balloon and the like can be exemplified. As a concrete example of these inorganic based balloons, as shirasu balloon, Winlite made by Ichiji Chemicals Co., Ltd., Sankilite made by Sanki Industries, Co., Ltd., as a glass balloon, Calloon made by Nippon Sheet Glass Co., Ltd., Celstar Z-28 made by Sumitomo 3M, MICRO BALLOON made by EMERSON & CUMING Co., Ltd., CELAMIC GLASS MODULES made by PITTSBURGE CORNING Co., Ltd., and GLASS BUBBLES made by 3M are commercially available in the market, as a silica balloon, Q-CEL made by Asahi Glass Co., Ltd., and E-SPHERES made by Taiyo Cement Co., Ltd., as a fly ash balloon, CEROSPHERES made by PFAMARKETING, Co., Ltd., and FILLITE made by FILLITE, U.S.A. Co., Ltd., as an aluminina balloon, BW made by Showa Denko K.K., as a zirconia balloon, HOLLOW ZIRCONIUM SPHEES SPHERES made by ZIRCOA Co., Ltd, as a carbon balloon, Crecasphere made by KUREHA Corp., and Carbosphere made by GENERAL TECHNOLOGIES Co., Ltd. are commercially available in the market.

As the above-described organic balloon, a balloon of thermosetting resin and a balloon of thermoplastic resin

can be exemplified, as a balloon of thermosetting resin, phenol balloon, epoxy balloon, and urea balloon can be exemplified, as a thermoplastic balloon, saran balloon, polystyrene balloon, polymethacrylate balloon, polyvinyl alcohol balloon, and styrene-acryl balloon can be exemplified. Moreover, a balloon of a cross-linked thermoplastic resin can be also used. As the term "balloon" used herein, a balloon after foaming may be available, and a balloon made by foaming after formulating one containing a foaming agent.

As a concrete example of these organic balloon, for example, as a phenol balloon, UCAR and PHENOLIC MICROBALLOONS made by Union carbide Co., Ltd., as an epoxy balloon, ECCOSPHERES made by EMERSON & CUMING Co., Ltd., as a urea balloon, ECCOSPHERES VF-O made by EMERSON & CUMING Co., Ltd., as a saran balloon, SARAN MICROSPHERES made by DOW CHEMICAL Co., Ltd., Expancel made by Nippon Filament Co., Ltd., and Matsumoto microsphere made by Matsumoto Fats and Fatty Oils Pharmaceuticals Co., Ltd, as a polystyrene balloon, DYLITE EXPANDABLE POLYSTYRENE made by ARCO POLYMERS and DYLITE EXPANDABLE POLYSTYRENE BEADS made by BASF WYANDOTE Co., Ltd., and as a cross-linking type styrene-acrylic acid balloon, SX863 (P) made by Japan Synthetic Rubber Co., Ltd. are commercially available in the market.

The above-described balloons may be used singularly or at least two kinds or more may be mixed and used in combination. Furthermore, those whose surface of balloons have been treated with aliphatic acid, aliphatic ester, rosin, lignin rhodinate, silane coupling agent, titanium coupling agent, aluminum coupling agent, polypropylene glycol and the like for the purpose of improving the dispersibility and workability of the formulated compound may be also used. These balloons are used to make it light weighted and its cost lower without damaging the flexibility and elongation/strength out of the physical properties when the formulated compound is cured.

An amount of a balloon is not particularly limited, however, preferably in the range from 0.1 to 50 parts by weight based on 100 parts by weight of a polymer having a cross-linkable silicon group, it is more preferable that it can be used in the range from 0.1 to 30 parts by weight. If this amount is less than 0.1 parts by weight, the effect of weight saving is small, and if it is a least 50 parts by weight, the lowering of the tension strength out of the mechanical properties in the case where this formulated product was cured may be admitted. Moreover, in the case where the specific gravity of the balloon is at least 0.1, it is preferably from 3 to 50 parts by weight, and more preferably from 5 to 30 parts by weight.

<Adjusting agent for physical properties>

To a curable composition of the present invention, an adjusting agent for physical properties for the purpose of adjusting the tensile property of the curable compound to be generated may be also added if it is necessary.

As an adjusting agent for physical properties is not particularly limited, however, for example, alkylalkoxy silanes such as methyltrimethoxy silane, dimethyldimethoxy silane, trimethylmethoxy silane, n-propyltrimethoxy silane and the like; alkylisopropenoxy silanes such as dimethyldiisopropenoxy silane, methyltriisopropenoxy silane, γ-glycidoxypropylmethyldiisopropenoxy silane and the like; alkoxy silanes having a functional group such as γ-glycidoxypropylmethyldimethoxy silane, γ-glycidoxypropyltrimethoxy silane, vinyltrimethoxy silane, vinyl dimethylmethoxy silane, γ-aminopropyltrimethoxy silane, N-(β-aminoethyl)-γ-aminopropylmethyldimethoxy silane, γ-mercaptopropyltrimethoxy silane, γ-mercaptopropylmethyldimethoxy silane and the like; silicone varnish; polysiloxanes and the like are listed. By utilizing the above-described adjusting agent for physical properties, the hardness at the time when a composition of the present invention is cured can be raised, or the hardness can be lowered, and the elongation can be carried out. The above-described adjusting agent for physical properties may be singularly used or two kinds or more may be used in combination.

<Silanol-containing compound>

To the curable composition of the present invention, a silanol-containing compound may be added if it is necessary to change the physical properties of the cured product and so on. A silanol-containing compound is referred to a compound having a one silanol group within a molecule and/or a compound capable of generating a compound having one silanol group within a molecule by reacting with water. Only one of these may be used or both compounds may be used at the same time.

A compound having one silanol group within a molecule which is one of a silanol-containing compound is not particularly limited, however, a compound in which silanol group is bonded to the terminal of a polymer comprising silicon, carbon and oxygen such as a compound that can be represented by $(R'')_3$ SiOH (provided that in the formula, R″ represents the same or different kind of substitute or non-substitute alkyl group or aryl group) and the like such as, $(CH_3)_3SiOH$, $(CH_3CH_2)_3SiOH$, $(CH_3CH_2CH_2)_3SiOH$, $(n\text{-}Bu)_3SiOH$, $(sec\text{-}Bu)_3SiOH$, $(tert\text{-}Bu)_3SiOH$, $(tert\text{-}Bu)Si(CH_3)_2OH$, $(C_5H_{11})_3SiOH$, $(C_6H_{13})_3SiOH$, $(C_6H_5)_3SiOH$, $(C_6H_5)_2Si(CH_3)OH$, $(C_6H_5)Si(CH_3)_2OH$, $(C_6H_5)_2Si(C_2H_5)OH$, $C_6H_5Si(C_2H_5)_2OH$, $C_6H_5CH_2Si(C_2H_5)_2OH$, $C_{10}H_7Si(CH_3)_2OH$, (however, in the above-described formula, provided that $C_6H_5$ represents phenyl group, and $C_{10}H_7$ represents naphthyl group) can be exemplified. Among these, a silanol-containing compound such as $(CH_3)_3$ SiOH is preferable from the viewpoints of being easily available and having an effect of small molecular weight.

It is estimated that a compound having one kind of a silanol group within a molecule makes the number of points of cross-linking reduced and the cured product flexible by reacting with cross-linkable silyl group of a polymer having a cross-linkable silicon group or siloxane bond generated by cross-linking.

A composition capable of generating a compound having a one kind of a silanol group within a molecule by reacting with water, which is one of the components of the present invention is not particularly limited, however, examples are:

N,N-bis(trimethylsilyl) acetoamide, N-(trimethylsilyl) acetoamide, bis(trimethylsilyl)trifluoroacetoamide, N-methyl-N-trimetylsilyltrifluoroacetoamide, bistrimethylsilyl urea, N-(tert-butyldimethylsilyl)-N-methyltrifluoroacetoamide, (N, N-dimethylamino)trimethylsilane, (N,N-diethylamino)trimethylsilane, hexamethyl disilazane, 1,1,3,3-tetramethyl disilazane, N-(trimethylsilyl) imidazole, trimethylsilyltrifluoromethane sulfonate, trimethylsilyl phenoxide, trimethylsilylated compound of n-octanol, trimethylsilylated product of 2-ethylhexanol, tris (trimethylsilyl)-ated compound of glycerin, tris (trimethylsilyl)-ated compound of trimethylolpropane, tris (trimethylsilyl) ated compound of pentaerythritol, tetra (trimethylsilyl)-ated compound of pentaerythritol, $(CH_3)_3SiNHSi(CH_3)_3$, $(CH_3)_3SiNSi(CH_3)_2$, allyloxytrimethylsilane, N,N-bis(trimethysilyl)acetoamide, N-(trimethylsilyl) acetoamide, bis(trimethylsilyl) trifluoroacetoamide, N-methyl-N-trimethylsilyl trifluoroacetoamide, bis-trimethylsilyl urea, N-(tert-butyldimethylsilyl) N-methyltrifluoroacetoamide, (N,N-dimethylamino) trimethyl silane, (N,N-diethyl amino) trimethyl silane, hexamethyl disilazane, 1,1,3,3-tetramethyl disilazane, N-(trimethylsilyl) imidazole, trimethylsilyl trifluoromethane sulfonate, trimethylsilyl phenoxide, trimethylsilylated compound of n-octanol, trimethylsilylated compound of 2-ethylhexanol, tris (trimethylsilyl)-lated compound of glycerin, tris (trimethylsilyl)-ated compound of trimethylol propane, tris (trimethylsilyl)-ated compound of pentaerythritol, tetra (trimethylsilyl)-ated compound of pentaerythritol,

N,O-bis (trimethylsilyl) acetoamide, N-(trimethylsilyl) acetoamide, trimethylsily phenoxide, trimethylsilylated compound of n-octanol, trimethylsilylated product of 2-ethylhexanol, tris (trimethylsilyl)-ated compound of glycerin, tris (trimethylsilyl)-ated of trimethylolpropane, tris (trimethylsilyl)-ated product of pentaerythritol, tetra (trimethylsilyl) of pentaerythritol and the like are listed, hwoever, the present invention is not limited thereto. These may be singularly used, or two kinds or more may be used in combination.

A compound capable of generating a compound having one silanol group within a molecule by reacting with this water content prepares a compound having one silanol group within a molecule by reacting with water content at the time of storing and curing or after the curing. It is estimated that a compound having one silanol group within a molecule generated in this way reduces the number of cross-linking points and imparts the flexibility to the cured product by reacting with siloxane bond generated by cross-linkable silyl group of a vinyl polymer or crosslinking as described above.

The addition amount of a silanol-containing compound can be appropriately adjusted in accordance with the expected physical properties of the cured product. The silanol-containing compound containing silanol can be added in an amount of 0.1 to 50 parts by weight based on 100 parts by weight of a polymer having a cross-linkable silicon group, preferably from 0.3 to 20 parts by weight, and more preferably from 0.5 to 10 parts by weight. If it is added less than 0.1 part by weight, the effect of addition does not appear, and if an amount is more than 50 parts by weight, the cross-linking is not enough, strength and gel fraction of the cured product becomes too lowered.

Moreover, the timing of adding a silanol-containing compound is not particularly limited, it may be added at the time when the polymer is prepared, and it may be added at the time when the curable composition is prepared.

<Thixotropy imparting agent (anti-sagging agent)>

To the curable composition of the present invention, thixotropy imparting agent (anti-sagging agent) may be added for the purpose of preventing the sagging and improving the workability if it is necessary.

Moreover, as an anti-sagging agent, it is not particularly limited, however examples are polyamide waxes, hydrogenated castor oil derivatives; metal soaps such as calcium stearate, aluminum stearate, and barium stearate. These thixo-property imparting agent (anti-sagging agent) may be used singularly, or two kinds or more may be used in combination.

<Photo-curing substance>

To a curable composition of the present invention, a photo-curing substance may be added if it is necessary. As used herein, photo-curing substance is referred to as a substance whose molecular structure causes the chemical change in a short period by action of the light and change of physical properties such as curing or the like occurs. Tackiness (also referred to as residual tack) of the curable compound's surface at the time when the curable composition is cured can be reduced by adding this photo-curing substance. This photo-curing substance is a substance capable of curing by applying the light, however, a representative photo-curing substance is, for example, a substance that can be cured by leaving it at rest for twenty four hours at a room temperature in a place of sunlight (near window). As this kind

of compound, various compounds such as many of organic monomers, oligomers, resins or compositions containing these are known, the kinds are not particularly limited, however, for example, unsaturated acrylic compounds, vinyl polycinnamate, or azide resins or the like is listed.

As an unsaturated acrylic compound, specifically, examples are (meth)acrylic esters of low molecular weight alcohols such as ethylene glycol, glycerin, trimethylol propane, pentaerythritol, neopentyl alcohol, (meth)acrylic esters of alcohols in which an acid such as bisphenol A and an isocyanuric acid or the above described low molecular weight alcohols are modified with ethyleneoxide or propylene oxide; (meth)acrylic esters of polyether polyol having a hydroxyl group at the terminal and whose main chain is polyether, polymer polyol obtained by conducting the radical polymerization of vinyl monomer in a polyol whose main chain is polyether, polyester polyol having a polyester at a main chain and a hydroxyl group at the terminal and a polymer polyol obtained by radical polymerization of vinyl monomer in polyol having a polyether at a main chain; epoxyacrylate oligomers obtained by reacting epoxy resin such as bisphenol A type or novolak type with (meth)acrylic acid; urethane acrylate oligomer having urethane bonding and a (meth)acryl group in a molecular chain obtained by reacting polyol, polyisocyanate and (meth)acrylate containing a hydroxyl group; and the like.

Vinyl polycinnamate is a photosensitive resin in which cinnamoil group is made photosensitive group, photosensitive resin in which polyvinyl alcohol has been esterized with cinnamic acid, and besides this, many vinyl polycinnamate derivatives are listed.

An azide resin is known as a photosensitive resin in which an azido group is a photosensitive group, it usually indicates a rubber photosensitive liquid to which an azide compound is added as a photosensitive agent, besides that, in "Photosensitive resin" (published on March 17, 1972), Printing society, Publication department, from page 93, from page 106, and from page 117), there are found detailed exemplifications, these may be used singularly or two or more may be used in combination and if it is necessary, it can be used by adding a sensitizing agent into it.

Among the above-described photo-curing substances, a unsaturated acryl based compound is preferable on the ground of easiness of treatment.

It is preferable that a photo-curing substance is added in an amount of 0.01 to 20 parts by weight based on 100 parts by weight of a polymer having a cross-linkable silicon group. When the amount is less than 0.01 part by weight, the effect is small, and when it is more than 20 parts by weight, bad influence upon the physical properties may appear. Also, when a sensitizing agent such as ketones and a nitro compound, a promoting agent such as amines, and the like are added, effects may be enhanced.

<Air oxidation curable substance>

To the curable composition of the present invention, an air oxidation curable substance may be added if it is necessary. An air oxidation curable substance is a compound having an unsaturated group which can be cross-linked and cured by oxygen in the air. By adding this air oxidation curable substance, tackiness (referred to as residual tack) of the surface of the cured product when the curable composition is cured can be reduced. An air oxidation curable substance in the present invention is a substance which is capable of curing by bringing it into contact with the air, more concretely, it has a nature that it cures in response to oxygen in the air. A representative air oxidation curable substance can be cured, for example, by leaving it at rest for twenty four hours at a room in the air.

As an air oxidation curable substance, examples are a dry oil such as china wood oil, a linseed oil and the like; a variety of kinds of alkyd resin obtained by modifying these dry oils; acryl polymer, epoxy resins, silicone resin modified with drying oil; 1, 2-polybutadiene, 1,4-polybutadiene, polymer and copolymer of C5-C8 diene, and furthermore, a variety of modified product of the relevant polymer and copolymer (such as a maleic modified compound and a boiled oil modified compound). Among these, a liquid compound (diene polymer in a liquid state) and its modified compound out of china wood oil and a diene polymer is particularly preferable.

Specific examples of the above-described liquid compound diene polymer are a liquid polymer obtained by polymerization or copolymerization of diene compound such as butadiene, chloroprene, isoprene, and 1,3-pentadiene, polymer such as NBR and SBR obtained by copolymerization of these diene compounds and a monomer such as acrylonitrile and styrene having a copolymerazable property in which the diene compound is the main body and furthermore, these various kinds of modified compounds (such as a maleic modified compound, a boiled oil modified compound). These may be used singularly, or two kinds or more may be used in combination. Among these liquid diene compounds, liquid state polybutadiene is preferable.

The air oxidation curable substances may be used singularly or two kinds or more may be also used in combination. The effect may be enhanced when a catalyst and metal drier which promote oxidation curing reaction at the same time with the air oxidation substances are used in combination. Examples of these catalysts and metal driers are metallic salts such as cobalt naphthenate, lead naphthenate, zirconium naphthenate, cobalt octylate, zirconium octylate and amine compounds.

It is preferable that an air oxidation curable substance is added in an amount of 0.01 to 20 parts by weight based on 100 parts by weight of a polymer having a cross-linkable silicon group. When the amount is less than 0.01

parts by weight, the effect is small, and when it more than 20 parts by weight, a bad influence on the physical properties may appear.

<Anti-Oxidizing agent>

To the curable composition of the present invention, an anti-oxidizing agent may be added if it is necessary. A variety of anti-oxidizing agents are known, and examples are a variety of kinds of these agents described in "Handbook of anti-oxidizing agents" published by Taiseisha, Co. Ltd., "Deterioration and stabilization of high molecular polymer materials" (pp. 235-242) published by CMC Chemicals Co., Ltd., however, the anti-oxidizing agents for the present invention are not limited thereto.

An example is thioether ones such as MARK PEP-36 and MARK AO-23 (both of them are available from Asahi Denka Co., Ltd.) and the like, a phosphorus anti-oxidizing agent such as Irgafos 38, Irgafos 168, and Irgafos P-EPQ (any one of them made by Ciba Specialty Chemicals Co., Ltd.). Among these, hindered phenol compounds indicated in the followings are preferable.

As a hindered phenol compound, concretely, the followings can be exemplified.

Examples are 2,6-di-tert-butyl-4-methylphenol, 2,6-di-tert-butyl-4-ethylphenol, mono (or di or tri) ($\alpha$-methylbenzyl) phenol, 2,2'-methylene bis (4-ethyl-6-tert-butylphenol), 2,2'-methylene bis (4-methyl-6-tert-butylphenol), 4,4'-butylidene bis (3-methyl-6-tert-butylphenol), 4,4'-thio bis (3-methyl-6-tert-butylphenol), 2,5-di-tert-butylhydroquinone, 2,5-di-tert-amylhydroquinone, triethylene glycol-bis [3-(3-tert-butyl-5-methyl-4-hydroxyphenyl) propionate], 1,6-hexanediol-bis [3-(3,5-di-tert-butyl-4-hydroxyphenyl) propionate], 2,4-bis-(n-octylthio)-6-(4-hydroxy-3,5-di-tert-butylanilino)-1,3,5-triazine, pentaerythrityl-tetrakis [3-(3,5-di-tert-butyl-4-hydroxyphenyl) propionate], 2,2-thio-diethylene bis [3-(3,5-di-tert-butyl-4-hydroxyphenyl) propionate], octadecyl-3-(3,5-di-tert-butyl-4-hydroxyphenyl) propionate, N,N'-hexamethylene bis (3,5-di-tert-butyl-4-hydroxy-hydrocinnamamide), 3,5-di-tert-butyl-4-hydroxy-benzylphosphonate-diethyl ester, 1,3,5-trimethyl-2,4,6-tris (3,5-di-tert-butyl-4-hydroxybenzyl) benzene, bis (3,5-di-tert-butyl-4-hydroxybenzylphosphoric ethyl) calcium, tris-(3,5-di-tert-butyl-4-hydroxybenzyl) isocyanurate, 2,4-bis[(octylthio)methyl] o-cresol, N,N'-bis [3-(3,5-di-tert-butyl-4-hydroxyphenyl) propionyl] hydrazine, tris (2,4-di-tert-butylphenyl) phosphite, 2-(5-methyl-2-hydroxyphenyl) benzotriazole, 2-[2-hydroxy-3,5-bis ($\alpha$.$\alpha$-dimethylbenzyl) phenyl]-2H-benzotriazole, 2-(3,5-di-tert-butyl-2-hydroxyphenyl) benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(3,5-di-tert-amyl-2-hydroxyphenyl) benzotriazole, 2-(2',-hydroxy-5'-tert-octylphenyl)-benzotriazole, a condensated compound with methyl-3-[3-tert-butyl-5-(2H-benzotrizole-2-yl)-4-hydroxyphenyl] propionate-polyethylene glycol (molecular weight of about 300), a hydroxyphenyl benzotriazole derivative, bis(1,2,2,6,6-pentametyl-4-piperydyl) 2-(3,5-di-tert-butyl-4-hydroxybenzyl)-2-n-butylmalonate, 2,4-di-tert-butylphenyl-3,5-di-tert-butyl-4-hydroxybenzoate.

Referring to as a brand name, examples are Nocrac 200, Nocrac M-17, Nocrac SP, Nocrac SP-N, Nocrac NS-5, Nocrac NS-6, Nocrac NS-30, Nocrac 300, Nocrac NS-7, Nocrac DAH (any one of these described above made by Ouchishinko Chemical Industrial Co., Ltd.), MARK AO-30, MARK AO-40, MARK AO-50, MARK AO-60, MARK AO-616, MARK AO-635, MARK AO-658, MARK AO-80, MARK AO-15, MARK AO-18, MARK 328, MARK AO-37 (any one of them described above made by Asahi Denka Co., Ltd.), IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, IRGANOX-1425WL (any one of them described above made by Ciba Specialty Chemicals Co., Ltd.), Sumilizer GM, Sumilizer GA-80 (both of them described above made by Sumitomo Chemicals Co., Ltd.), however, the anti-oxidizing agents are not limited thereto.

An anti-oxidizing agent may be used in combination with a light stabilizer described later, and it is particularly preferable that its effect is further exerted and specifically, heat resistance is enhanced by utilizing in combination with it. TINUVIN C353 and TINUVIN B75 (both of them made by Ciba Specialty Chemicals Co., Ltd.) in which an anti-oxidizing agent and a light stabilizer are previously mixed, and the like may be also used.

An amount of an anti-oxidizing agent is preferably from 0.1 to 10 parts by weight based on 100 parts by weight of a polymer having a cross-linkable silicon group. When an amount is used less than 0.1 part by weight, the improvement effect for weather resistance is small, and when it is more than 5 parts by weight, the effect is not significantly different, and economically disadvantageous.

<Light stabilizer>

To a curable composition of the present invention, a light stabilizer may be added if it is necessary. A variety of light stabilizers are known and examples are a variety of kinds of these agents described in "Handbook of anti-oxidizing agents" published by Taiseisha Co., Ltd., "Deterioration and stabilization of high molecular polymer materials" (page 235 to 242) published by CMC Chemicals Co., Ltd., however, the light stabilizer for the present invention are not limited thereto.

Although it is not particularly limited among the light stabilizers, an ultraviolet light absorber is preferably used, specifically, examples are a benzotriazole compound such as TINUVIN P, TINUVIN 234, TINUVIN 320, TINUVIN 326, TINUVIN 327, TINUVIN 329, and TINUVIN 213 (any one of them described above made by Ciba Specialty Chemicals Co., Ltd.), triazine compound such as TINUVIN 1577, benzophenone compound such as CHIMASSORB81, and benzoate compound such as TINUVIN 120 (Ciba Specialty Chemicals Co., Ltd.).

Moreover, a hindered amine compound is also preferable, and such compounds are listed below.

Examples are dimethyl succinate-1-(2-hydroxyethyl)-4-hydroxy-2,2,6,6-tetraemethylpiperidine polycondensated compound, poly [{6-(1,1,3,3-tetramethylbutyl) amino-1,3,5-triazine-2,4-di-yl}{(2,2,6,6-tetramethyl-4-piperidyl)} imino], N,N'-bis (3-aminopropyl) ethylenediamine-2,4-bis [N-butyl-N-(1,2,2,6,6-pentamethyl-4-piperidyl) amino]-6-chloro-1,3,5-triazine condensated compound, bis (2,2,6,6-tetramethyl-4-piperidyl) cebacate, succinic acid-bis (2,2,6,6-tetramethyl-4-piperidinyl) ester.

Referring to as a brand name, examples are TINUVIN 622LD, TINUVIN 144, CHIMASSORB944LD, CHIMASSORB119FL, Irgafos 168 (any one of these described above made by Ciba Specialty Chemicals Co., Ltd.), MARK LA-52, MARK LA-57, MARK LA-62, MARK LA-67, MARK LA-63, MARK LA-68, MARK LA-82, MARK LA-87 (any one of these described above made by Asahi Denka Co., Ltd.), SANOL LS-770, SANOL LS-765, SANOL LS-292, SANOL LS-2626, SANOL LS-1114, SANOL LS-744, SANOL LS-440 (any one of these described above made by SANKYO lifetech Co., Ltd.), however, the light stabilizers are not limited thereto.

Moreover, since the combination of an ultraviolet light absorber and a hindered amine compound may exert the effect more significantly than single use, it is not limited, however, these may be used in combination, and in some cases, a combination use may be preferable.

A light stabilizer may be used in combination with an anti-oxidizing agent described above, and it is particularly preferable that its effect is further exerted and specifically, weather resistance is enhanced by using in combination with it. TINUVIN C353, TINUVIN B75 (both of them made by Ciba Specialty Chemicals Co., Ltd.) in which an anti-oxidizing agent and a light stabilizer are previously mixed, and the like may be also used.

An amount used of a light stabilizer is preferably in the range from 0.1 to 10 parts by weight based on 100 parts by weight of a polymer having a cross-linkable silicon group. When an amount is less than 0.1 part by weight, the improvement effect for weather resistance is small, and when it is more than 5 parts by weight, the effect is not significantly different, and economically disadvantageous.

<Other additives>

To the curable composition of the present invention, various kinds of additives may be added if it is necessary for the purpose of adjusting a variety of physical properties of the curable composition or curable compound. Examples of these additives are a fire retardant, a curable adjustor, an antioxidant, a radical inhibitor, an ultraviolet light absorber, a metal inactivation agent, an antiozonant, a phosphorus peroxide decomposer, a lubricant, pigments, foaming agent, photo-curing resin. These additives may be used singularly or two kinds of these or more may be used in combination.

Concrete examples of these additives are described, for example, in respective specifications of JP-B-4-69659, JP-B-7-108928, JP-A-63-254149 and JP-A-64-22904.

The curable composition of the present invention may be prepared as 1 component type which cures with moisture in the air after building construction by previously having formulated, sealed and stored all of the formulation components, or it may be adjusted as 2 components in which components such as a curing catalyst, a filler, a plasticizer, water are previously formulated, and then, separately as a curing agent, the formulated components and a polymer composition are mixed before the use. In the case of 2 components type, a coloring agent can be added at mixing the two components, for example, when a sealing material corresponding to the color of a siding board is provided, a variety of colors can be prepared with limited stock and so on, the correspondence with multi-colors which is required from the market is easily conducted, and it is more preferable that it is used for a low building. As for a coloring agent, for example, a coloring agent in which a pigment and a plasticizer are mixed, and depending on the cases, fillers are added and mixed and then it has been made in a paste state is used, the working is easily carried out. Moreover, the fine adjustment of the curing speed can be done at a worksite by adding a retarder at mixing two components together.

The curable composition of the present invention is not limited to these described below, however, it can be utilized for a variety of uses, such as in sealing material for construction or industries such as an elastic sealing material sealant for construction, sealing material for bilamellar glass, and a sealing material for vehicles, materials for electric/electronic parts such as solar cell back surface sealing material and the like, electric insulating materials such as an insulating covering material for electric wire/cable, tackiness adherence, bonding adhesive, elastic adhesive, reactive hot melt adhesive, paint, powder coating, coating material, foam, sealing material of can cap and the like, a potting agent for electric and electronics, film, gasket, casting material, various molding materials, artificial marble and sealing member for corrosion prevention/waterproof of wired glass and shatterproof glass edge face (cut surface), vibration absorption/vibration damping/soundproofing, base insulation material used for automobile, marine structure, household electrical

appliance and the like, liquid sealant used for an automobile parts, parts of electric devices, a variety of kinds of machine parts and the like.

The curing composition of the present invention is particularly useful as a sealing material and adhesive, and particularly useful for use requiring the weather resistance.

EXAMPLES

Hereinafter, the present invention is explained in detail by Examples, however, the present invention is not limited to these Examples.

SYNTHESIS EXAMPLE 1

After 40 g of sodium hydroxide was added to the mixture of 420 g of polyoxypropylene glycol having number average molecular weight of about 3,000 and 80 g of polyoxypropylene triol having number average molecular weight of about 3,000 by GPC measurement (polystyrene conversion), and reacted for 13 hours at 60°C, 19 g of bromochloromethane was added, and reacted for 10 hours at 60°C. The molecular weight distribution of the obtained polymer was 2.1, and viscosity was 385 poises. Sequentially, after 15 g of allyl chloride was added to this polymer and reacted for 36 hours, it was subjected to absorption treatment with aluminum silicate. After the catalyst of chloroplatinic acid was added to 500 g of this processed polymer, 12 g of dimethoxymethyl silane was added and reacted for 4 hours at 80°C. As a result of this, polyoxypropylene polymer (polymer a) having at least one cross-linkable silyl group at the terminal of the polymer was obtained.

SYNTHESIS EXAMPLE 2

Under nitrogen atmosphere, in 240 g of toluene in which a temperature was maintained at 100-110°C, the mixture of 74 g of methyl methacrylate, 351 g of butyl acrylate, 52.5 g of 2-ethylhexyl acrylate, 22.5 g of γ-methacryloxypropylmethyldimethoxy silane, 10.85 g of 2, 2' - azobis (2-methylbutyronitrile) and 100 g of toluene was prepared, polymerization was carried out by dropping. As a result of this, toluene solution of alkylester (meth)acrylate polymer (polymer b) having at least one cross-linkable silyl group in a molecule having number average molecular weight of about 7,800 by GPC measurement (polystyrene conversion) was obtained.

SYNTHESIS EXAMPLE 3

After in a flask of 50 ml was charged with 0.63 g of copper (I) bromide, 0.76 g of pentamethyldiethylene triamine, 5 ml of acetonitrile, 1.6 g of diethyl 2,5-dibromoadipate, and 44.7 g of butyl acrylate, and after conducting freezing and deaerating, under nitrogen atmosphere, the components were reacted for 7 hours at 70°C. A polymer having a bromine group at the terminal was obtained by removing a copper catalyst through a column of an activated alumina. A flask of 200 ml was charged with 35 g of this polymer having a bromine group at this terminal, 2.2 g of potassium pentenoate, and 35 ml of N,N-dimethyl acetoamide, and the components were reacted for 4 hours at 70°C. Unreacted potassium pentenoate and generated potassium bromide in the reaction mixture liquid were removed by aqueous extraction purification and a polymer having alkenyl group at the terminal was obtained. A pressure proof reactive tube of 200 ml was charged with 15 g of this polymer having an alkenyl group at the terminal, 1.8 ml of dimethoxymethyl silane, 0.26 ml of methyl orthoformate, and $10^{-4}$ mmol of platinum bis (divinyltetramethyl disiloxane), reacted for 4 hours at 100°C, and butyl acrylate polymer (polymer c) having at least one cross-linkable silyl group at the terminal of a polymer having number average molecular weight of about 11,900 by GPC measurement (polystyrene conversion) was obtained.

SYNTHESIS EXAMPLE 4

After the polymer a obtained in Synthesis example 1 and the toluene solution of the polymer b obtained in Synthesis example 2 were mixed at a solid content ratio of 49 parts by weight: 21 parts by weight, and the polymer mixture 1 was obtained by removing toluene under heating depressurization.

SYNTHESIS EXAMPLE 5

After the polymer a obtained in Synthesis example 1 and the toluene solution of the polymer b obtained in Synthesis example 2 were mixed at a solid content ratio of 49 parts by weight: 51 parts by weight, and the polymer mixture 2 was obtained by removing toluene under heating depressurization.

EXAMPLE 1

120 parts by weight of surface treated calcium carbonate (Hakuenka CCR: Shiraishi Kogyo Kaisya Ltd.) and 20 parts by weight of titanium oxide (Tipaque R-820: Ishihara Sangyo Kaisha, Ltd.) were putted into planetary mixer of 5 L, and drying was conducted for 2 hours at 120°C under depressurization. To this, 70 parts by weight of the polymer mixture 1 obtained in Synthesis example 4, 30 parts by weight of the polymer c obtained in Synthesis example 3, as a polymer component, 55 parts by weight of phtalic acid ester compound (diisodecyl phthalate: J Plus Co., Ltd.) as a plasticizer, 2 parts by weight of anti-sagging agent (Disparlon #6500: Kusumoto Chemicals, Ltd.), 1 part by weight of ultraviolet light absorber (TINUVIN 327: Ciba Specialty Chemicals Co., Ltd.), 1 part by weight of light stabilizer (SANOL LS770: SANKYO Co., Ltd.) were projected, and further, the agitation was conducted for 2 hours at 120°C under depressurization. After it was cooled to a room temperature, 2 parts by weight of dehydrating agent (A-171: Nippon Unicar Co., Ltd.), 3 parts by weight of an adhesion imparting agent (A-1120: Nippon Unicar Co., Ltd.), and 2 parts by weight of curing catalyst (Neostann U-220: Nitto Kasei, Co, Ltd.) were projected, and further agitated for 30 minutes at room temperature, the curable composition 1 was prepared by filling it into a cartridge.

COMPARATIVE EXAMPLE 1

The curable composition 2 was prepared by conducting operations in the same manner as Example 1 except that 100 parts by weight of the polymer mixture 2 obtained in Synthesis example 5 was used as a polymer component.

COMPARATIVE EXAMPLE 2

The curable composition 3 was prepared by conducting operations in the same manner as Example 1 except that 49 parts by weight of the polymer a obtained in Synthesis example 1 and 51 parts by weight of the polymer c obtained in Synthesis example 3 were used as a polymer component.

SYNTHESIS EXAMPLE 6

After 500 g of polyoxypropylene having average molecular weight of about 19,000 obtained by utilizing a composite metal cyanide complex catalyst and introduced with an allylether group at the terminal of the molecular terminal was putted in a pressure reaction container equipped with an agitator, 4.6 g of methyldimethoxy silane and $1 \times 10^{-4}$ [eq/vinyl group] of chloroplatinic catalyst (chloroplatinic acid hexahydrate) were added and after reacting for 2 hours at 90°C, and distilling away unreacted methyldimethoxysilane under depressurization, a polyoxypropylene polymer (polymer d) having at least one cross-linkable silyl group at the terminal was obtained.

SYNTHESIS EXAMPLE 7

Under nitrogen atmosphere, in 250 g of toluene in which a temperature was maintained at 100 to 110°C, the solution of 340 g of butyl acrylate, 50 g of methyl methacrylate, 100 g of stearyl methacrylate, 10 g of γ-methacryloxypropylmethyldimethoxysilane, 2.5 g of V-59 made by Wako Pure Chemical Industries, Ltd. and 100 g of toluene was dropped for 4 hours and polymerization was carried out. As a result of this, toluene solution of alkylester (meth) acrylate polymer (polymer e) having at least one cross-linkable silyl group in a molecule whose number average molecular weight of about 18,000 by GPC measurement (polystyrene conversion) was obtained.

SYNTHESIS EXAMPLE 8

After in a flask of 2 L, 8.39 g of copper (I) bromide, 0.41 ml of pentamethyldiethylene triamine (hereinafter, referred to as triamine), 112 ml of acetonitrile, 17.6 g of diethyl 2,5-dibromoadipate, and 224 ml of butyl acrylate were added, heated at 70°C, 895 ml of butyl acrylate was intermittently dropped while adding 1.84 ml of triamine, and further, 288 ml of 1,7-octadiene and 4.1 ml of triamine were added and reacted for 8 hours at 70°C. The number average molecular weight of the obtained polymer by GPC measurement (polystyrene conversion) was 24,100, the molecular weight distribution was 1.27, and the number of alkenyl groups per one molecule of the polymer by $^1$H-NMR analysis was 2.6. 648 g of a polymer after purification, 25.5 ml of dimethoxymethylhydrosilane, 7.54 ml of methyl orthoformate, and $3 \times 10^{-3}$ equivalent amount of platinum bis (divinyltetramethyl disiloxane) based on an alkenyl group of the polymer in a molar ratio were putted, reacted for 2 hours at 100°C, and butyl acrylate polymer (polymer f) having number average molecular weight by GPC measurement (polystyrene conversion) of 29,600, and the average number of silyl groups, which is introduced per one molecule, is 1.9 by $^1$H-NMR analysis was obtained.

EXAMPLE 2

150 parts by weight of surface treated calcium carbonate (Hakuenka CCR: Shiraishi Industries Co., Ltd.), 20 parts by weight of ground calcium carbonate (Nanox 25A: Maruo Calcium Co., Ltd.) and 10 parts by weight of titanium oxide (Tipaque R-820: Ishihara Sangyo Kaisha, Ltd.) were putted into planetary mixer of 5 L, and drying was conducted for 2 hours under depressurization at 120°C. To this, 70 parts by weight of the polymer f obtained in Synthesis example 8, 21 parts by weight of the polymer d obtained in Synthesis example 6, 9 parts by weight of the polymer e obtained in Synthesis example 7, as a polymer component, 60 parts by weight of a phthalic acid ester compound (diisodecyl phthalate: J-Plus Co., Ltd.) as a plasticizer, 2 parts by weight of anti-sagging agent (Disparlon #6500: Kusumoto Chemicals Co., Ltd.), 1 part by weight of ultraviolet light absorber (TINUVIN 213: Ciba Specialty Chemicals Co., Ltd.), 1 part by weight of light stabilizer (SANOL LS770: SANKYO Co., Ltd.) were projected, and further, the agitation was conducted under depressurization for 2 hours at 120°C. After it was cooled to a room temperature, 2 parts by weight of dehydrating agent (A-171: Nippon Unicar Co., Ltd.), 2 parts by weight of an adhesion imparting agent (A-1120: Nippon Unicar Co., Ltd.), and 2 parts by weight of curing catalyst (Neostan U-220: Nitto Kasei Co., Ltd.) were projected, and further agitated for 30 minutes at room temperature, the curable composition 4 was prepared by filling into a cartridge.

COMPARATIVE EXAMPLE 3

The curable composition 5 was prepared by conducting operations in the same manner as Example 2 except that the polymer d (9 parts by weight) obtained in Synthesis example 6 instead of the polymer e (9 parts by weight) obtained in Synthesis example 7 was used as a polymer component (namely, the total amount of 30 parts by weight of the polymer d was used).

COMPARATIVE EXAMPLE 4

The curable composition 6 was prepared by conducting operations in the same manner as Example 2 except that total weight (that is, 100 parts by weight) of the polymer f obtained in Synthesis example 8 was used as a polymer component.

(Evaluation of storage stability)

The cartridge of the curable composition was stored for 2 weeks and 4 weeks in a dryer at 50°C. The evaluation of the storage stability was conducted by measuring the skinning time of the curable composition before and after the storage to find its delay rate.
The skinning time was measured by the following method.
After the curable composition was filled in a metalic container (inner diameter 45 mm × depth 9 mm) so that the bubbles were not involved with, the surface was scraped with a spatula to make it flat. This time was assumed to be the measurement initiation time. Whether or not the curable composition is attached on the spatula by lightly pressing the surface with the spatula was observed by visual observation. The time when the curable composition was not attached on the spatula was assumed to be termination time of the measurement. The time required from the measurement initiation to the termination was assumed to be a skinning time. The measurement was conducted at 23±2°C under moisture of 50±5 %.
It should be noted that the delay rate was found by the following calculating equation.

$$\text{Delay rate} = (\text{skinning time after storage at } 50°\text{C}) \div (\text{initial skinning time})$$

(Evaluation of tensile property)

After the curable composition was filled into a mold form having a thickness of 3 mm and left it at rest for 3 days at 23°C, subsequently, a sheet in a rubber state was obtained by heating for 4 days at 50°C. A tension property was measured by die-cutting No.3 shape dumb-bell described in JIS K 6251 from the sheet in a rubber state, and 100 % modulus and its strength and elongation at the time of breaking were measured. From Table 2, it is understood that the delay rate of the curable composition of Example 2 was smaller than those of the curable compositions of Comparative Example 3 and Comparative Example 4 and that the curable composition of Example 2 is excellent in storage stability.

Moreover, from Table 1, it is understood that as for 100 % modulus and the elongation at the time of breaking in the tension property of curable compound of Example 1, 100 % modulus was lower and the elongation at the time of breaking was higher than the value estimated by proportional calculation using the value of Comparative Example 1 and the value of Comparative Example 2.

TABLE 1

| | | Ex.1 | Com. Ex.1 | Com. Ex.2 |
|---|---|---|---|---|
| Polyoxypropylene polymer of Synthesis Ex. 1 | Polymer a | 49 | 49 | 49 |
| (meth)acryl polymer of Synthesis Ex. 2 | Polymer b | 21 | 51 | |
| (meth)acryl polymer of Synthesis Ex. 3 | polymer c | 30 | | 51 |
| Plasticizer | Diisodecyl phthalate | 55 | 55 | 55 |
| Surface treatment calcium carbonate | Hakuenka CCR | 120 | 120 | 120 |
| Titanium oxide | Tipaque R820 | 20 | 20 | 20 |
| Anti-sagging agent | Disparlon #6500 | 2 | 2 | 2 |
| Ultraviolet light absorber | TINUVIN 327 | 1 | 1 | 1 |
| Light stabilizer | SANOL LS-770 | 1 | 1 | 1 |
| Dehydrate agent | A-171 | 2 | 2 | 2 |
| Adhesion imparting agent | A-1120 | 3 | 3 | 3 |
| Catalyst | Neostann U220 | 2 | 2 | 2 |
| Tensile property | 100 % modulus (MPa) | 0.44 | 0.59 | 0.40 |
| | Strength at break(MPa) | 1.53 | 1.53 | 1.60 |
| | Elongation at break (%) | 380 | 265 | 405 |

TABLE 2

| | | Ex.2 | Com. Ex.3 | Com. Ex.4 |
|---|---|---|---|---|
| Polyoxypropylene polymer of Synthesis Ex. 6 | polymer d | 21 | 30 | |
| (meth)acryl polymer of Synthesizing Ex. 7 | polymer e | 9 | | |
| (meth)acryl polymer of Synthesis Ex. 8 | polymer f | 70 | 70 | 100 |
| Plasticizer | Diisodecyl phthalate | 60 | 60 | 60 |
| Surface treatment calcium carbonate | Hakuenka CCR | 150 | 150 | 150 |
| Ground calcium carbonate | Nanox 25A | 10 | 10 | 10 |
| Titanium oxide | Tipaque R820 | 20 | 20 | 20 |
| Anti-sagging agent | Disparlon #6500 | 2 | 2 | 2 |
| Ultraviolet light absorber | TINUVIN 213 | 1 | 1 | 1 |
| Light stabilizer | SANOL LS-770 | 1 | 1 | 1 |
| Dehydrate agent | A-171 | 2 | 2 | 2 |
| Adhesion imparting agent | A-1120 | 2 | 2 | 2 |
| Catalyst | Neostann U220 | 2 | 2 | 2 |
| Skinning time (minute) | Initial period | 60 | 60 | 65 |
| | 50°C × 2 weeks (delay rate) | 95 (1.6) | 115 (1.9) | 125 (1.9) |
| | 50°C × 4 weeks (delay rate) | 160 (2.7) | 345 (5.8) | 410 (6.3) |
| Tensile property | 100 % modulus (MPa) | 0.34 | 0.33 | 0.37 |
| | Strength at the time of breaking (MPa) | 1.04 | 1.04 | 0.77 |
| | Elongation at the time of breaking (%) | 510 | 520 | 330 |

INDUSTRIAL APPLICABILITY

Since the present invention is excellent in weather resistance, tensile property of the obtained cured product and excellent in storage stability, a curable composition useful for a sealing material can be provided.

## Claims

1. A curable composition comprising a polyoxypropylene polymer having a cross-linkable silicon group in a molecule (A), a (meth)acrylic acid ester polymer having a cross-linkable silicon group in its side chain(B), and a (meth)acrylic acid ester polymer having a cross-linkable silicon group only at terminal(C).

2. The curable composition of Claim 1, wherein the polymer (C) is prepared by living radical polymerization.

3. The curable composition of Claim 2, wherein the polymer (C) is prepared by atom transfer radical polymerization.

4. The curable composition of Claim 1, wherein the polymer (B) is obtained by polymerizing a (meth)acrylic acid ester monomer containing a polymerizable monomer having a methyl ester group.

5. The curable composition of any one of Claims 1 to 4, wherein molecular weight distribution of the polymer (B) is at least 1.8 and molecular weight distribution of the polymer (C) is at most 1.8.

6. The curable composition of any one of Claims 1 to 5, wherein weight of (A) in the total weight of (A), (B) and (C) is at most 50 % by weight.

## Patentansprüche

1. Härtbare Zusammensetzung, umfassend ein Polyoxypropylenpolymer mit einer vernetzbaren Biliziumgruppe in einem Molekül (A), ein (Meth)acrylsäureesterpolymer mit einer vernetzbaren Siliziumgruppe an seiner Seitenkette (B) und ein (Meth)acryisäureesterpolymer mit einer vernetzbaren Siliziumgruppe nur am Ende (C).

2. Härtbare Zusammensetzung nach Anspruch 1, wobei das Polymer (C) hergestellt wird durch lebende Radikalpolymerisation.

3. Härtbare Zusammensetzung nach Anspruch 2, wobei das Polymer (C) hergestellt wird durch Atomüberführungsradikalpolymerisation.

4. Härtbare Zusammensetzung nach Anspruch 1, wobei das Polymer (B) erhalten ist durch Polymerisieren eines (Meth)acrylsäureestermonomers, das ein polymerisierbares Monomer enthält, welches eine Methylestergruppe aufweist.

5. Härtbare Zusammensetzung nach einem der Ansprüche 1 bis 4, wobei die Molekulargewichtsverteilung des Polymers (B) wenigstens 1,8 und die Molekulargewichtsverteilung des Polymers (C) höchstens 1,8 ist.

6. Härtbare Zusammensetzung nach einem der Ansprüche 1 bis 5, wobei das Gewicht an (A) beim Gesamtgewicht von (A), (B) und (C) höchstens 50 Gewicht-% ist.

## Revendications

1. Composition durcissable comprenant un polymère de polyoxypropylène présentant un groupe de silicium réticulable dans une molécule (A), un polymère d'ester d'acide (méth)acrylique présentant un groupe de silicium réticulable dans sa chaîne latérale (B), et un polymère d'ester d'acide (méth)acrylique présentant un groupe de silicium réticulable uniquement à la terminaison (C).

2. Composition durcissable selon la revendication 1, dans laquelle le polymère (C) est préparé par polymérisation radicalaire vivante.

**3.** Composition durcissable selon la revendication 2, dans laquelle le polymère (C) est préparé par polymérisation radicalaire par transfert d'atome.

**4.** Composition durcissable selon la revendication 1, dans laquelle le polymère (B) est obtenu par polymérisation d'un monomère d'ester d'acide (méth)acrylique contenant un monomère polymérisable présentant un groupe d'ester méthylique.

**5.** Composition durcissable selon l'une quelconque des revendications 1 à 4, dans laquelle la distribution de masse moléculaire du polymère (B) est d'au moins 1,8 et la distribution de masse moléculaire du polymère (C) est d'au plus 1,8.

**6.** Composition durcissable selon l'une quelconque des revendications 1 à 5, dans laquelle la masse de (A) dans la masse totale de (A), (B) et (C) est d'au plus 50 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63065086 B
- JP 2042367 B
- JP 2044845 B
- JP 11116763 A
- JP 61215623 A
- JP 46027250 B
- JP 59015336 B
- US 3278457 A
- US 3278458 A
- US 3278459 A
- US 3427256 A
- US 3427334 A
- US 3427335 A
- JP 11060723 A
- JP 1396791 B
- JP 1727750 B
- JP 2135751 B
- JP 3072527 A
- JP 5262808 A
- JP 6239912 A
- JP 8283310 A
- JP 116132 A
- JP 4132706 A
- US 4414370 A
- JP 6207 A
- JP 58005 A
- JP 1313522 A
- US 5010166 A
- JP 4069659 B
- JP 7108928 B
- JP 63254149 A
- JP 6422904 A


### Non-patent literature cited in the description


- Photosensitive resin. Printing society, 17 March 1972, 93, 106, 117
- Handbook of anti-oxidizing agents. Deterioration and stabilization of high molecular polymer materials. CMC Chemicals Co., Ltd, 235-242
- Handbook of anti-oxidizing agents. Deterioration and stabilization of high molecular polymer materials. Taiseisha Co., Ltd, 235-242